# EUROPÄISCHE PATENTSCHRIFT

(11) **EP 2 292 700 B1**
(45) Veröffentlichungstag und Bekanntmachung des Hinweises auf die Patenterteilung: **02.11.2011**
(21) Anmeldenummer: 10008076.1
(22) Anmeldetag: 22.07.2004
(51) Int. Cl.: C09B 67/00, C09B 69/06

(54) **Cyanoborat-Farbstoffe**
Cyanoborate dyes
Colorant de cyanoborate

(30) Priorität: 21.08.2003 DE 10338834; 21.08.2003 DE 10338933; 09.12.2003 DE 10357360; 09.12.2003 DE 10357359; 17.02.2004 DE 102004007611; 17.02.2004 DE 102004007610
(43) Veröffentlichungstag der Anmeldung: 09.03.2011
(62) Teilanmeldung aus: 04763390.4
(73) Patentinhaber: Merck Patent GmbH, 64293 Darmstadt (DE)
(72) Erfinder: Ignatyev, Nikolai (Mykola), Dr., 47058 Duisburg (DE); Welz-Biermann, Urs, Prof. Dr., Dalian 116021 (CN); Willner, Helge, Prof. Dr., 45481 Muelheim/Ruhr (DE); Finze, Maik, Dr., 31582 Nienburg (DE); Bernhardt, Eduard, Dr., 42107 Wuppertal (DE); Kucheryna, Andriy, Dr., Kyiv 4215 (UA)

(56) Entgegenhaltungen:
- EP-A1- 0 636 493
- EP-A2- 0 055 223
- X.YANG ET AL.: "Penetrated Ion Pairs: Photochemistry of Cyanine Dyes within Organic Borates", J.AM.CHEM.SOC., Bd. 114, 1992, Seiten 793-794, XP002610679,
- H.IWAMOTO ET AL.: "Anion-catalyzed Phase-transfer Catalysis I. Application to Diazo-coupling Reactions", BULL.CHEM.SOC.JPN., Bd. 56, Nr. 3, 1983, Seiten 796-801, XP002610680,

## Beschreibung

Die vorliegende Erfindung betrifft kationische Farbstoffe mit neuen Anionen, die zum Färben von Kunststoffen und Kunststofffasern, zur Herstellung von Flexodruckfarben, Kugelschreiberpasten, Stempelfarben zum Färben von Leder und Papier in der traditionellen Anwendung, die jedoch auch in der Photo- und Lasertechnik sowie in der elektronischen Industrie verwendet werden können.

Eine Vielzahl von Farbstoffen sind heute bekannt. Man unterscheidet nach der Herkunft zwischen natürlichen und synthetischen Farbstoffen. Bekannte synthetische Farbstoffe sind z.B. Anilinblau, Fuchsin oder Methylorange. Die Bezeichnung der Farbstoffe erfolgt (a) durch den wissenschaftlichen Namen nach rein chemischen Gesichtspunkten aufgrund der Chromophoren-Konfiguration (z.B.: Azo-, Azin-, Anthrachinon-, Acridin-, Cyanin-, Oxazin-, Polymethin-, Thiazin-, Triarylmethan-Farbstoffe); (b) nach dem Verhalten zur Faser und der anzuwendenden Färbetechnik; basische oder kationische Farbstoffe, Beizen-, Direkt-, Dispersions-, Entwicklungs-, Küpen-, Metallkomplex-, Reakiv-, Säure- oder Schwefel-Farbstoffe; (c) nach dem Colour Index mit seinem Ziffernsystem (C. I...) oder dem Wort/Ziffernsystem (Acid Red..); (d) durch im allgemeinen als Warenzeichen geschützte Namen (Handels-Farbstoff-Bezeichnung); z.B.: Sirius-, Anthrasol-, Erio-, Indanthren-, Remazol-, Basilen-, Levafix-, Cibacron-, Drimaren- oder Procion-Farbstoffe.

Die meisten synthetischen Farbstoffe sind aromatische bzw. heterocyclische und entweder ionische (z.B. alle wasserlöslichen Farbstoffe) oder nichtionische Verbindungen (z.B. Dispersions-Farbstoffe). Bei ionischen Farbstoffen unterscheidet man zwischen anionischen und kationischen Farbstoffen.

Kationische Farbstoffe bestehen aus organischen Kationen mit positiven Ladungen die über konjugierte Bindungen delokalisiert sind und einem meist anorganischen Anion. Es sind zumeist Farbstoffe, deren Aminogruppen, die auch substituiert sein können, mit in die Resonanz einbezogen sind. Die Auswahl an bekannten kationischen Farbstoffen ist groß, die Zahl der Anionen hingegen beschränkt sich auf Chloride, Bromide, Iodide, Perchlorate, Tetrafluoroborate, Hexafluorophosphate, Alkyl- oder Aryl-Sulfate, insbesondere Tosylate, Acetate oder Oxalate, wie in H. Zollinger, Color Chemistry, VCH, Weinheim 1991 beschrieben.

Bekannte kationische Farbstoffe sind z.B. Rhodamin, Safranin oder Viktoriablau, die üblicherweise Chlorid-Ionen oder Tosylate als Gegenion besitzen. Diese Verbindungen sind elektrochemisch nicht sehr stabil. Im Stand der Technik findet man Bemühungen, neue Anionen einzuführen, die Farbstoffe elektrochemisch stabiler machen. Die eingesetzten Anionen wie (BF₄)⁻ oder (PF₆)⁻ weisen jedoch andere Nachteile auf. Farbstoffe mit Tetrafluoroborat-Anionen sind thermisch weniger stabil und besitzen eine schlechte Löslichkeit in organischen Lösungsmitteln. Farbstoffe mit Hexafluorophosphat-Anionen weisen weder gute thermische noch gute Hydrolysestabilität auf.

JP-A-2-3052 beschreibt den Farbstoff 3,3'-Diethoxyethyl-2,2'-thiadicarbocyanin Trifluormethyltrifluorborat als
Photopolymerisationsinitiator. Diese und ähnliche Verbindungen wurden synthetisiert, um luftstabile Initiatoren zu erhalten, die bei Bestrahlung von Licht mit Wellenlängen von 600 - 900 nm oder mehr, eine Polymerisation auslösen können.

Die Aufgabe der vorliegenden Erfindung war, Farbstoffe zur Verfügung zu stellen, die elektrochemisch stabil, thermisch stabil und hydrolysestabil sind, sowie eine gute Löslichkeit in organischen Lösungsmitteln aufweisen.

Gelöst wird die Aufgabe durch kationische Farbstoffe der allgemeinen Formel (I):

CAT⁺ Y⁻ (I),

wobei Y⁻ ein CAB⁻-Anion der allgemeinen Formel (II-1)

[B(CN)_{y1}F_{4-y1}-ₓ₁(R⁰)ₓ₁]⁻ (II-1)

ist und
y1 1, 2, 3 oder 4,
x1 0, 1, 2 oder 3 und
R⁰ Alkyl, Aryl, fluoriertes Alkyl, fluoriertes Aryl, Cycloalkyl oder Alkyl-Aryl bedeutet, mit der Bedingung, dass R⁰ Wasserstoff sein kann, wenn y1 >2 ist,
und
CAT⁺ ein Kation ist, ausgewählt aus der Gruppe der Azin-, Xanthen-, Polymethin-, Styryl-, Azo-, Tetrazolium-, Pyrylium-, Benzopyrylium-, Thiopyrylium-, Benzothiopyrylium-, Thiazin-, Oxazin-, Triarylmethan-, Diarylmethan-, Acridin-, Chinolin-, Iso-Chinolin- oder quarternierten Azafluorenon-Farbstoffe.

Die Cyanoborat-Anionen, im folgenden als CAB-Anionen (CAB⁻) abgekürzt, und Verfahren zu deren Herstellung sind aus E. Bernhardt, G. Henkel, H. Willner, Z. Anorg. Allg. Chem. 626 (2000) 560; D. Williams, B. Pleune, J. Kouvetakis, M. D. Williams, R. A. Andersen, J. Amer. Chem. Soc. 122 (2000) 7735; E. Bernhardt, M. Berkei, M. Schürmann, H. Willner, Z. Anorg. Allg. Chem. 628 (2002) 1734) und E. Bernhardt, G. Henkel, H. Willner, G. Pawelke, H. Bürger, Chem. Eur. J. 7 (2001) 4696; G. Pawelke, H. Bürger, Coord. Chem. Rev. 215 (2001) 243) bekannt oder können in Analogie zu diesen Verfahren hergestellt werden.

In Formel II-1 ist y1 bevorzugt 1 oder 4, besonders bevorzugt 4. In Formel II-1 ist x1 bevorzugt 2 oder 3, besonders bevorzugt 3.

Anionen CAB⁻ sind beispielsweise [B(CN)₄]⁻, [B(CN)F₃]⁻, [B(CN)₂F₂]⁻ oder [B(CN)₃F]⁻, [B(CN)(CF₃)₃]⁻, [B(CN)₂(CF₃)₂]⁻, [B(CN)(C₂F₅)₃]⁻, [B(CN)₂(C₂F₅)₂]⁻ , [B(CN)(C₃F₇)₃]⁻, [B(CN)₂(C₃F₇)₂]⁻_{,} [B(CN)(C₄F₉)₃]⁻, [B(CN)₂(C₄F₉)₂]⁻, [B(CN)(CH₃)₃]⁻, [B(CN)₂(CH₃)₂]⁻, [B(CN)(C₂H₅)₃]⁻, [B(CN)₂(C₂H₅)₂]⁻, [B(CN)(C₃H₇)₃]⁻, [B(CN)₂(C₃H₇)₂]⁻, [B(CN)(C₄H₉)₃]⁻, [B(CN)₂(C₄H₉)₂]⁻, [B(CN)(C₆H₁₃)₃]⁻, [B(CN)(CHF₂)₃]⁻, [B(CN)₂(CHF₂)₂]⁻, [B(CN)(CH₂CF₃)₃]⁻. [B(CN)₂(CH₂CF₃)₂]⁻. [B(CN)(CH₂C₂F₅)₃]⁻, [B(CN)₂(CH₂C₂F₅)₂]⁻, [B(CN)₂(CH₂CH₂C₃F₇)₂]⁻, [B(CN)₂(CH₂C₃F₇)₂]⁻ oder [B(CN)(C₆H₅)₃]⁻.

Besonders bevorzugt ist CAB⁻ [B(CN)(CF₃)₃]⁻, [B(CN)F₃]⁻, [B(CN)₂F₂]⁻ oder [B(CN)₄]⁻.

Ganz besonders bevorzugt ist CAB- [B(CN)₄]⁻.

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Azinfarbstoffs ist.

Verbindungen mit einem Azingrundgerüst sind beispielsweise Verbindungen basierend auf Phenazin 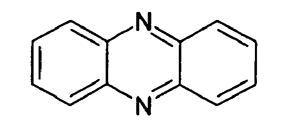 oder
Chinoxalin

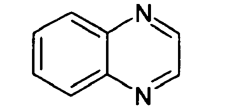

Aus der Gruppe der Phenazine sind wiederum Safranine, Induline und Nigrosine bevorzugt.

Bevorzugte Kationen können durch die Formel III 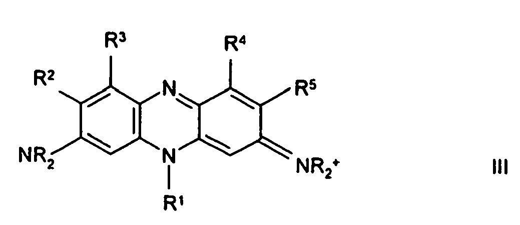 beschrieben werden, wobei
R jeweils unabhängig voneinander H, Alkyl oder Aryl,
R¹ Wasserstoff oder Aryl,
R², R³, R⁴, R⁵ jeweils unabhängig voneinander H, Alkyl, Aryl oder NR₂ bedeutet.

In den vorstehenden oder nachfolgenden Formeln bedeutet Alkyl eine Alkylgruppe, die linear oder verzweigt ist und 1 bis 20 C-Atome, vorzugsweise 1 bis 12 C-Atome, besonders bevorzugt 1, 2, 3 oder 4C-Atome hat und gegebenenfalls vollständig oder teilweise fluoriert ist. Alkyl bedeutet vorzugsweise Methyl, weiterhin Ethyl, Isopropyl, Propyl, Butyl, Isobutyl, sek.-Butyl oder tert.-Butyl, ferner auch Pentyl, 1-, 2- oder 3-Methylbutyl, 1,1-, 1,2- oder 2,2-Dimethylpropyl, 1-Ethylpropyl oder Hexyl. Gegebenenfalls Fluormethyl, Difluormethyl, Trifluormethyl, Pentafluorethyl, Heptafluorpropyl oder Nonafluorbutyl. Besonders bevorzugt ist Methyl oder Ethyl.

In den nachfolgenden Formeln steht Alkenyl für ein geradkettiges oder verzweigtes Alkenyl mit 2 bis 20 C-Atomen, wobei auch mehrere Doppelbindungen vorhanden sein können, vorzugsweise für Allyl, 2- oder 3-Butenyl, Isobutenyl, sek.-Butenyl, ferner bevorzugt ist 4-Pentenyl, iso-Pentenyl oder 5-Hexenyl.

In den nachfolgenden Formeln steht Alkinyl für ein geradkettiges oder verzweigtes Alkinyl mit 2 bis 20 C-Atomen, wobei auch mehrere Dreifachbindungen vorhanden sein können, vorzugsweise für Ethinyl, 1- oder 2-Propinyl, 2- oder 3-Butinyl, ferner bevorzugt ist 4-Pentinyl, 3-Pentinyl oder 5-Hexinyl.

In Alkyl-Aryl hat Aryl eine der nachfolgend angegebenen bevorzugten Bedeutungen. Besonders bevorzugt für Alkyl-Aryl ist Benzyl, 4-Methoxyphenylethyl, 3-Methoxyphenylethyl, 2-Methoxybenzyl, 3-Methoxybenzyl, 4-Methoxybenzyl, 2-Ethoxybenzyl, 2-Methylbenzyl, 3-Methylbenzyl, 4-tert.-Butylbenzyl, 2-(Trifluormethyl)benzyl, 3-(Trifluormethyl)benzyl, 4-Fluorbenzyl, 3-lodbenzyl, 4-(Trifluormethoxy)benzyl, 3-(Trifluormethoxy)benzyl oder 4-(Trifluormethylsulfanyl)benzyl.

In den vorstehenden oder nachfolgenden Formeln bedeutet Aryl vorzugsweise durch Z mono-, di- oder trisubstituiertes Phenyl, wobei Z Wasserstoff, Alkyl, NO₂, F, Cl, Br, I, OH, Carboxy, Alkoxy, OCF₃, SCN, SCF₃, C(O)OAlkyl, CH₂-C(O)OAlkyl, Amino oder Alkylamino bedeuten kann. In die Definition von Aryl ist auch perfluoriertes Aryl, insbesondere perfluoriertes Phenyl eingeschlossen.

Aryl bedeutet daher bevorzugt Phenyl, o-, m- oder p-Methylphenyl, o-, m- oder p-Ethylphenyl, o-, m- oder p-Propylphenyl, o-, m- oder p-Isopropylphenyl, o-, m- oder p-tert.-Butylphenyl, o-, m- oder p-Aminophenyl, o-, m- oder p-(N,N-Dimethylamino)phenyl, o-, m- oder p-Nitrophenyl, o-, m- oder p-Hydroxyphenyl, o-, m- oder p-Methoxyphenyl, o-, m- oder p-Ethoxyphenyl, o-, m-, p-(Trifluormethyl)phenyl, o-, m-, p-(Trifluormethoxy)phenyl, o-, m-, p-(Trifluormethylsulfanyl)phenyl, o-, m- oder p-Fluorphenyl, o-, m- oder p-Chlorphenyl, o-, m- oder p-Bromphenyl, o-, m- oder p-Iodphenyl, weiter bevorzugt 2,3-, 2,4-, 2,5-, 2,6-, 3,4- oder 3,5-Dimethylphenyl, 2,3-, 2,4-, 2,5-, 2,6-, 3,4- oder 3,5-Dihydroxyphenyl, 2,3-, 2,4-, 2,5-, 2,6-, 3,4- oder 3,5-Difluorphenyl, 2,3-, 2,4-, 2,5-, 2,6-, 3,4- oder 3,5-Dichlorphenyl, 2,3-, 2,4-, 2,5-, 2,6-, 3,4- oder 3,5-Dibromphenyl, 2,3-, 2,4-, 2,5-, 2,6-, 3,4- oder 3,5-Dimethoxyphenyl, 5-Fluor-2-methylphenyl, 3,4,5-Trimethoxyphenyl oder 2,4,5-Trimethylphenyl.

In den nachfolgenden Formeln bedeutet Arylalkyl Aryl, das ein- oder mehrfach durch Alkyl mit 1-4 C-Atomen substituiert ist.

In den nachfolgenden Formeln bedeutet Carbocyclus einen ungesättigen mono- oder bicyclischen Rest mit 5 bis 14 Ringgliedern, vorzugsweise Cyclopentenyl, Cyclopentadienyl, Cyclohexenyl, 1,3- oder 1,4-Cyclohexadienyl, Phenyl, Cycloheptatrienyl, Cyclooctenyl, Indenyl, Fluorenyl, Napthyl, Anthracenyl oder Phenantrenyl, welcher ein- oder mehrfach durch Z, wie zuvor beschrieben, substituiert sein kann.

In den vorstehenden oder nachfolgenden Formeln bedeutet Cycloalkyl eine Cycloalkylgruppe mit 3 bis 8 C-Atomen, vorzugsweise Cyclopropyl, Cyclobutyl, Cyclopentyl, Cyclohexyl, Cycloheptyl oder Cyclooctyl.

In den nachfolgenden Formeln bedeutet Cycloalkylen eine Cycloalkylgruppe mit 5 bis 8 C-Atomen, die teilweise ungesättigt ist. Vorzugsweise Cyclopent-1-enyl, Cyclohex-1-enyl, Cylohex-1,3-dienyl, Cyclohex-1,4-dienyl, Cyclohept-1-enyl oder Cyclooct-1-enyl.

In den nachfolgenden Formeln bedeutet Heteroaryl einen ungesättigten mono- oder bicyclischen heterocyclischen Rest mit 5 bis 13 Ringgliedern, wobei 1, 2 oder 3 N- und/oder 1 oder 2 S- oder O-Atome vorliegen können und der heterocyclische Rest ein- oder mehrfach durch Z, wie zuvor beschrieben, substituiert sein kann.

Heteroaryl ist vorzugsweise substituiertes oder unsubstituiertes 2- oder 3-Furyl, 2- oder 3-Thienyl, 1-, 2- oder 3-Pyrrolyl, 1-, 2-, 4- oder 5-Imidazolyl, 3-, 4- oder 5-Pyrazolyl, 2-, 4- oder 5-Oxazolyl, 3-, 4- oder 5-Isoxazolyl, 2-, 4- oder 5-Thiazolyl, 3-, 4- oder 5-Isothiazolyl, 2-, 3- oder 4-Pyridyl, 2-, 4-, 5- oder 6-Pyrimidinyl, weiterhin bevorzugt 1,2,3-Triazol-1-, -4- oder -5-yl, 1, 1,2,4-Triazol-1-, -4- oder -5-yl, 1- oder 5-Tetrazolyl, 1,2,3-Oxadiazol-4- oder -5-yl 1,2,4-Oxadiazol-3- oder -5-yl, 1,3,4-Thiadiazol-2- oder -5-yl, 1,2,4-Thiadiazol-3- oder -5-yl, 1,2,3-Thiadiazol-4- oder -5-yl, 2-, 3-, 4-, 5- oder 6-2H-Thiopyranyl, 2-, 3- oder 4-4H-Thiopyranyl, 3- oder 4-Pyridazinyl, Pyrazinyl, 2-, 3-, 4-, 5-, 6- oder 7-Benzofuryl, 2-, 3-, 4-, 5-, 6- oder 7-Benzothienyl, 1-, 2-, 3-, 4-, 5-, 6- oder 7-1 H-Indolyl, 1-, 2-, 4- oder 5-Benzimidazolyl, 1-, 3-, 4-, 5-, 6- oder 7-Benzopyrazolyl, 2-, 4-, 5-, 6- oder 7-Benzoxazolyl, 3-, 4-, 5-, 6- oder 7-Benzisoxazolyl, 2-, 4-, 5-, 6- oder 7-Benzthiazolyl, 2-, 4-, 5-, 6- oder 7-Benzisothiazolyl, 4-, 5-, 6- oder 7-Benz-2,1,3-oxadiazolyl, 1-, 2-, 3-, 4-, 5-, 6-, 7- oder 8-Chinolinyl, 1-, 3-, 4-, 5-, 6-, 7- oder 8-Isochinolinyl, 1-, 2-, 3-, 4- oder 9-Carbazolyl, 1-, 2-, 3-, 4-, 5-, 6-, 7-, 8- oder 9-Acridinyl, 3-, 4-, 5-, 6-, 7- oder 8-Cinnolinyl, 2-, 4-, 5-, 6-, 7- oder 8-Chinazolinyl.

Besonders bevorzugte Kationen CAT⁺, die auf dem Phenazingrundgerüst basieren, sind die folgenden Kationen: 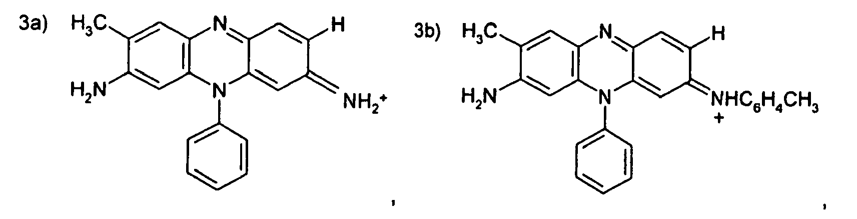 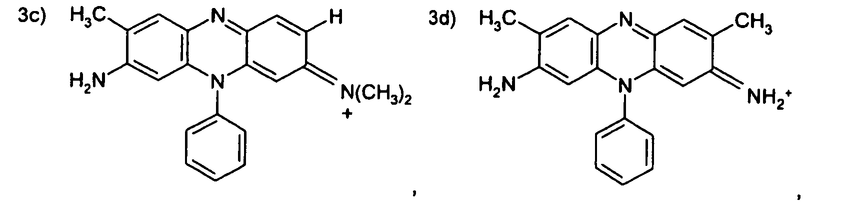 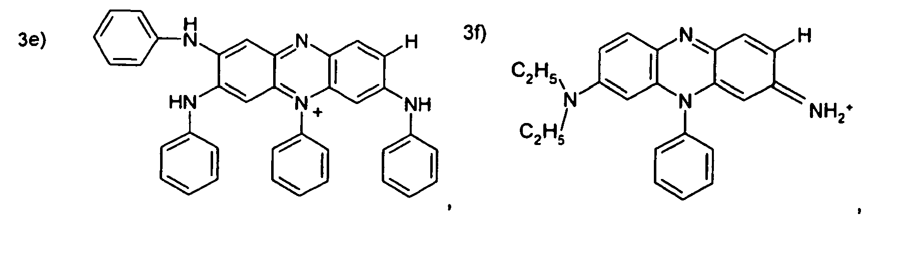 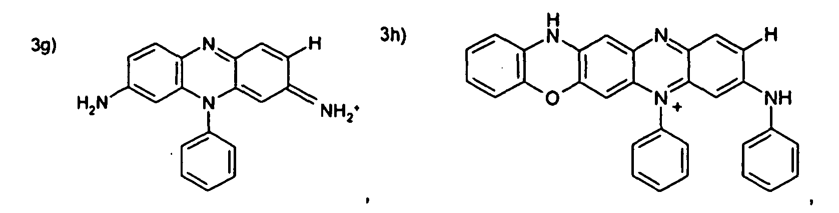 oder

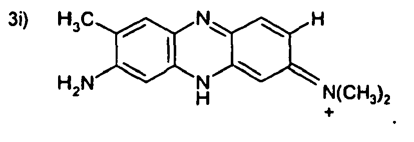

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Xanthenfarbstoffs ist.

Bevorzugte Kationen können durch die Formel IV 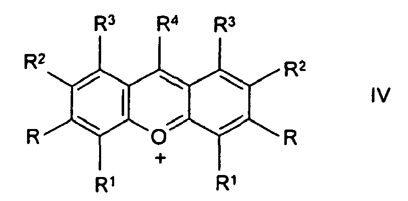 beschrieben werden, wobei
R jeweils unabhängig voneinander H, Alkyl, Alkenyl, Aryl, Heteroaryl, OH, OAlkyl, OC(O)Alkyl, NH₂, NH-Alkyl, NH-Aryl, NH-Heteroaryl, Cl oder Br, R¹ jeweils unabhängig voneinander H, Alkyl, Aryl, Alkyl-Aryl, OH, OAlkyl, OC(O)Alkyl, Cl, Br oder I,
R² jeweils unabhängig voneinander H, Alkyl, Aryl, OH, OAlkyl, OC(O)Alkyl, OC(O)Aryl, CN, NO₂, Cl, Br oder I,
R³ jeweils unabhängig voneinander H, Alkyl, Alkenyl, Aryl, OH, OAlkyl, Cl, Br oder I,
R⁴ jeweils unabhängig voneinander H, Alkyl, Alkenyl, Aryl, Heteroaryl, Alkyl-Aryl, CH₂C(O)H, COOH, COOAlkyl, COOCycloalkyl, COOAryl, COOHeteroaryl, OAlkyl, Cl, Br oder I bedeutet.
Nebenstehende R, R¹, R², R³ oder R⁴ können miteinander mittels Einfach- oder Doppelbindungen verbunden sein.

Besonders bevorzugte Verbindungen aus der Gruppe der Xanthene sind Verbindungen der Formel IVa 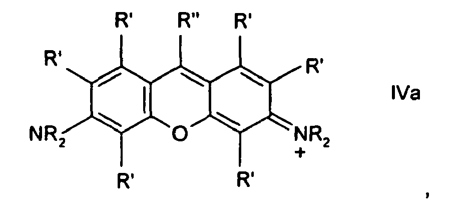 worin
R jeweils unabhängig voneinander H, Alkyl, Alkenyl, Aryl oder teilweise durch COOH substituiertes Alkyl,
R' jeweils unabhängig voneinander H, Alkyl, Alkenyl, Aryl, Aryl-COOR, NH₂, NH-Alkyl, NH-Aryl, NH-Heteroaryl oder N(Alkyl)₂,
R" jeweils unabhängig voneinander H, Alkyl, Alkenyl, Aryl, Heteroaryl, teilweise durch COOR substituiertes Alkyl oder Aryl-COOR,
bedeutet.
R ist jeweils unabhängig besonders bevorzugt H oder Alkyl. R' ist jeweils unabhängig besonders bevorzugt H oder Alkyl. R" ist besonders bevorzugt Aryl, das durch mindestens einen Substituenten COOR substituiert ist und gegebenenfalls weiter durch Z substituiert sein kann, wobei Z eine der zuvor bei Aryl angegebenen Bedeutungen hat.
Nebenstehende R, R' oder R" können miteinander mittels Einfach- oder Doppelbindungen verbunden sein.

Besonders bevorzugte Kationen CAT⁺, die auf dem Xanthengrundgerüst basieren, sind die folgenden Kationen: 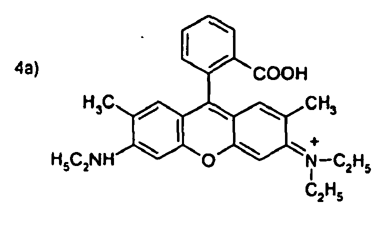 oder

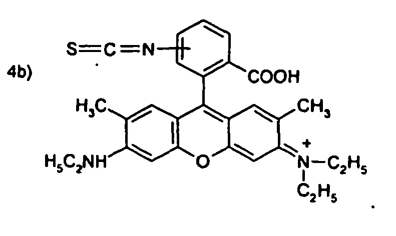

Erfindungsgemäß ist eine Gruppe von Verbindungen der Formel I bevorzugt, wobei Y- jeweils eine der bei Formel I angegebenen oder bevorzugt beschriebenen Bedeutungen hat und worin CAT⁺ ein Kation eines Polymethinfarbstoffs ist.

Zur Gruppe der Polymethinfarbstoffe gehören die Cyanin-, Carbocyanin-, Azacarbocyanin-, Diazacarbocyanin-, Triazacarbocyanin-, Hemicyanin- und Diazahemicyanin-Farbstoffe. Die Hemicyanin-Farbstoffe sind eine ausgewählte Gruppe der Styrylfarbstoffe und können auch diesen zugeordnet werden. Die Diazahemicyanin-Farbstoffe sind eine ausgewählte Gruppe der Azofarbstoffe und können auch diesen zugeordnet werden.

Bevorzugte Kationen von Cyaninfarbstoffen können durch die Formel V-1 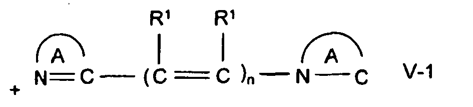 beschrieben werden, wobei
n 0, 1, 2, 3, 4 oder 5,
R¹ jeweils unabhängig voneinander H, Cl, Br, I, Alkyl, teilweise oder vollständig chloriertes Alkyl, Alkenyl, Cycloalkyl, Aryl, Heteroaryl, OAlkyl, OAryl, SAlkyl, SAryl, NHAlkyl, N(Alkyl)₂, C(O)H, C(O)Alkyl, C(O)Aryl, CN, N=N-Aryl, P(Aryl)₂, NHCOAlkyl oder NHCOAryl bedeutet
und das Ringsystem, dargestellt durch 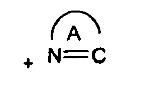 oder 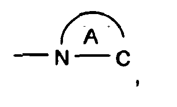 einen Stickstoff enthaltenden ungesättigten mono-, bi- oder tricyclischen Heterocyclus mit 5 bis 13 Ringgliedern, wobei weiterhin 1, 2 oder 3 N- und/oder 1 oder 2 S- oder O-Atome vorliegen können und der heterocyclische Rest ein- oder mehrfach durch Z, wie zuvor beschrieben, substituiert sein kann.
n ist besonders bevorzugt 1.

Ein besonders bevorzugtes Kation CAT⁺ aus der Gruppe der Cyaninfarbstoffe ist:

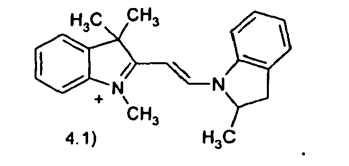

Bevorzugte Kationen von Carbocyaninfarbstoffen können durch die Formel V-2 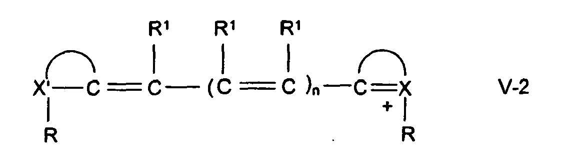 beschrieben werden, wobei
X N, O oder S,
X' N, O, S oder C,
n 0, 1, 2, 3, 4 oder 5,
R jeweils unabhängig voneinander Alkyl, Alkenyl, Cycloalkyl, Aryl oder Heteroaryl bedeutet
und
R¹ jeweils unabhängig voneinander H, Cl, Br, I, Alkyl, teilweise oder vollständig chloriertes Alkyl, Alkenyl, Cycloalkyl, Aryl, Heteroaryl, OAlkyl, OAryl, SAlkyl, SAryl, NHAlkyl, N(Alkyl)₂, C(O)H, C(O)Alkyl, C(O)Aryl, CN, N=N-Aryl, P(Aryl)₂, NHCOAlkyl oder NHCOAryl bedeutet.

Die jeweiligen Radikale R und/oder R¹ können jeweils miteinander oder mit einem Substituenten des Ringsystems mittels Einfach- oder Doppelbindungen verbunden sein. Für den Auszug der Formel 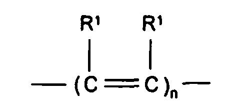 mit n=2 bedeutet das, dass sich ein Cyclohexen oder Cyclopenten in der Verbindung befinden kann, wie beispielsweise 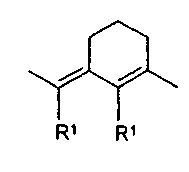 oder

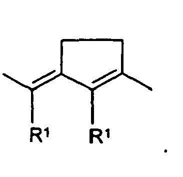

Das Ringsystem, dargestellt durch 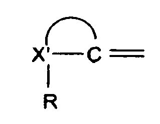 oder 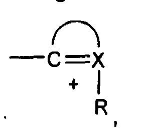 bedeutet einen ungesättigten mono-, bi- oder tricyclischen Heterocyclus mit 5 bis 13 Ringgliedern, wobei 1, 2 oder 3 N- und/oder 1 oder 2 S- oder O-Atome vorliegen können und der heterocyclische Rest ein- oder mehrfach durch Z, wie zuvor beschrieben, substituiert sein kann.

Das Ringsystem bedeutet vorzugsweise Pyridin, Chinolin, α-Pyran, γ-Thiopyran, Thiazol, Pyrrol, Imidazol oder Oxazol, die weiterhin an ein Phenyl kondensiert sein können. Der Ringschluss kann nicht nur zwischen Stickstoff und dem nebenstehenden Kohlenstoff bestehen, sondern auch zwischen Stickstoff und den in der Kette folgenden Kohlenstoff-Atomen oder den R¹-Resten erfolgen, wenn diese Kohlenstoff enthalten, oder zwischen Kohlenstoff-Atomen mit Bildung von aromatischen Systemen. Besonders bevorzugte Ringsysteme sind 3,3-Dimethyl-3H-indol, 1,1-Dimethyl-1 H-benzo[e]indol, Benzo[cd]indol, Benzothiazol, Benzoxazol, Benzimidazol oder Benzopyridin, die gegebenenfalls weiter durch Z substituiert sein können. Z ist hierbei besonders bevorzugt Alkyl oder Cl.
n ist bevorzugt 1, 2 oder 3.
R¹ in Formel V-2 ist bevorzugt Alkyl, Cl, OAlkyl, OAryl, SAryl oder Aryl.
R ist jeweils unabhängig in Formel V-2 bevorzugt Methyl, Ethyl, Propyl oder Butyl, wobei das jeweilige Alkyl gegebenenfalls durch SO₃H oder COOH substituiert sein kann.

Besonders bevorzugte Kationen CAT⁺ aus der Gruppe der Carbocyaninfarbstoffe sind: 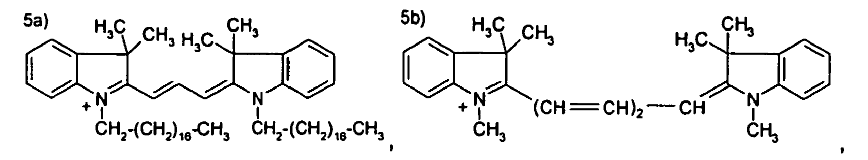 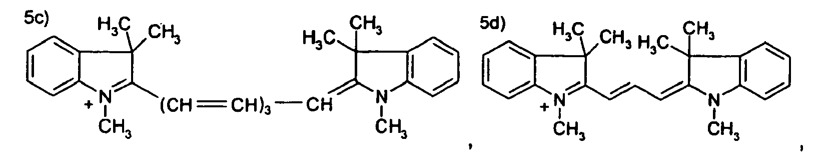 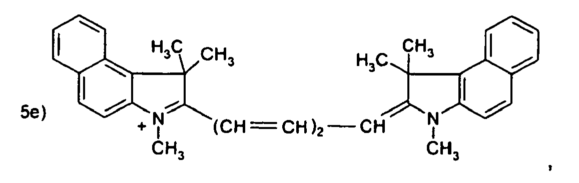 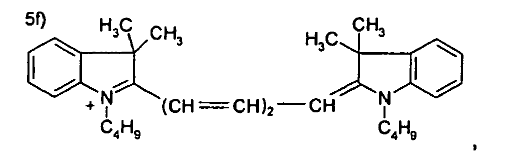 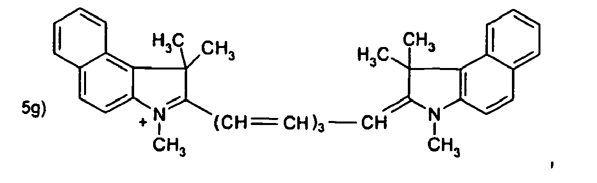 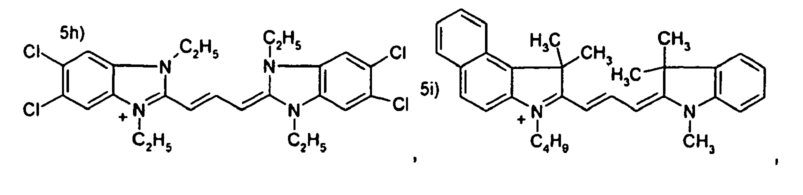 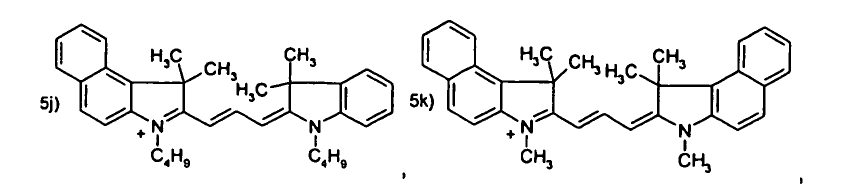 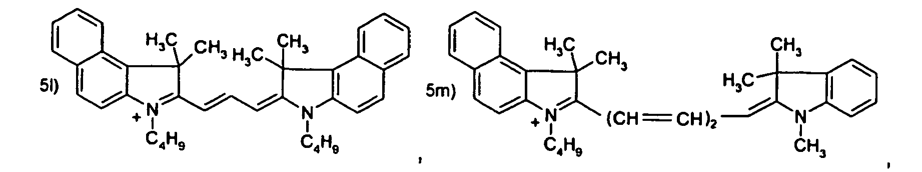 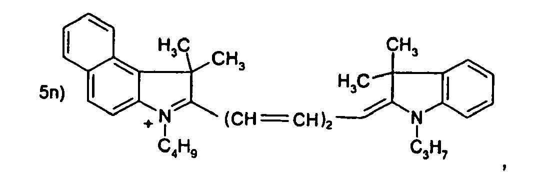 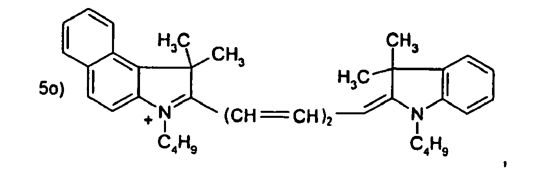 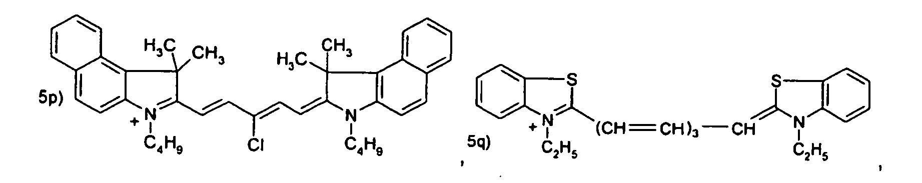 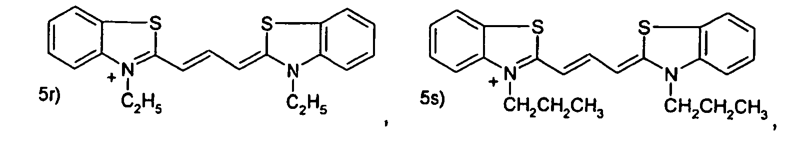 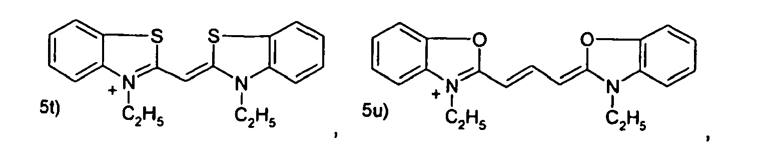 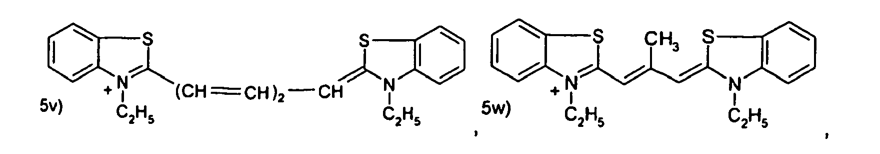 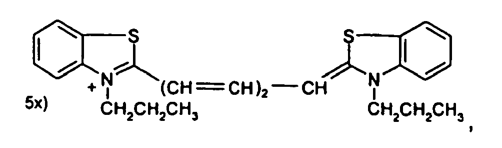 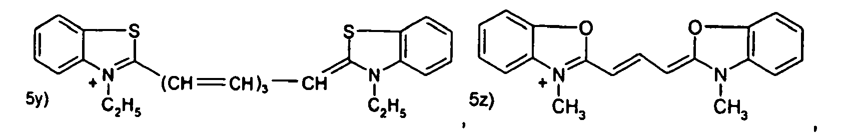 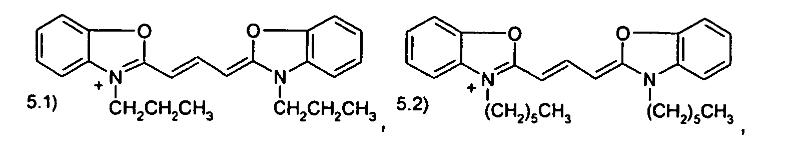 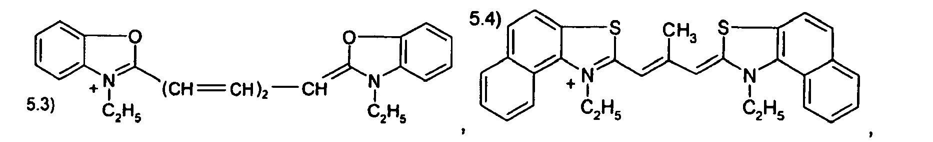 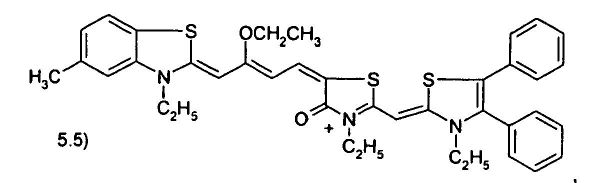 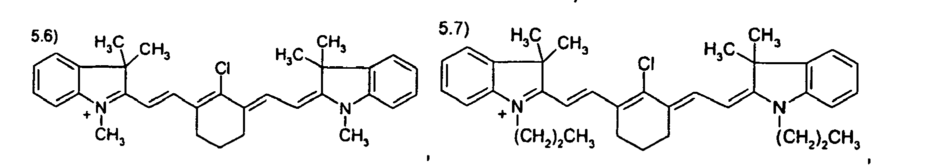 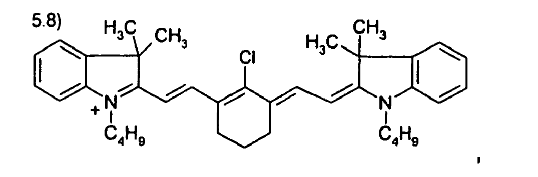 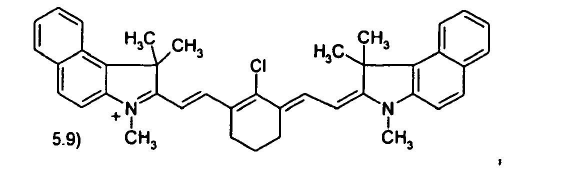 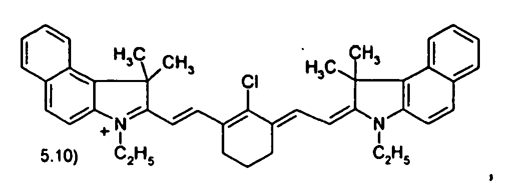 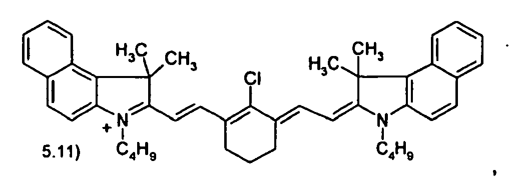 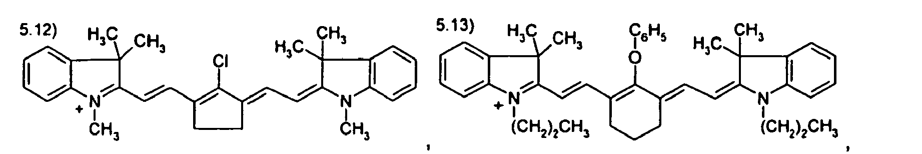 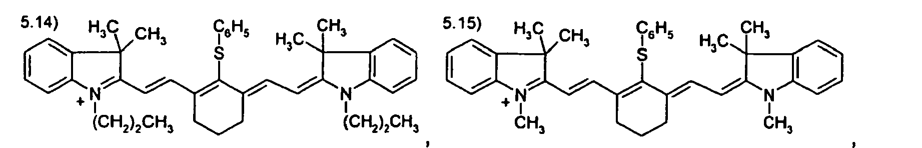 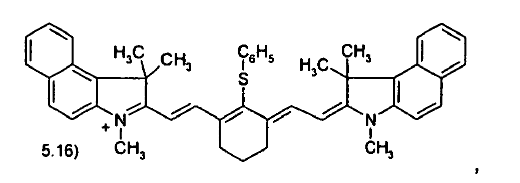 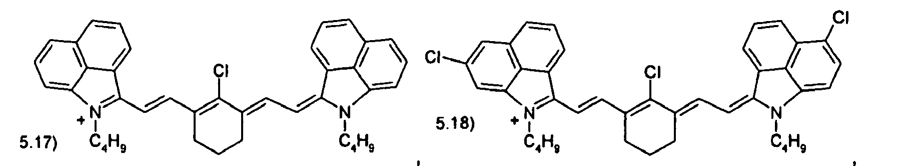 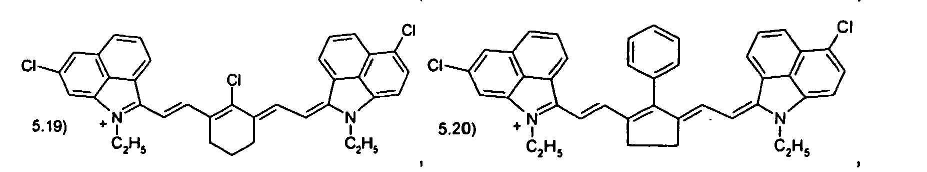 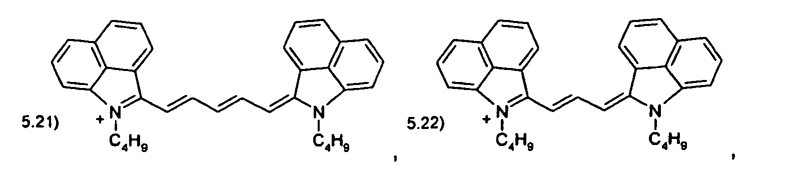 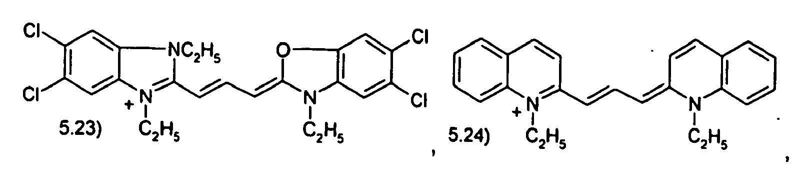 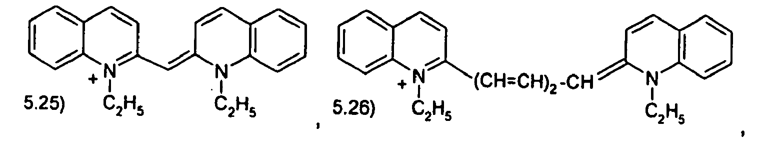 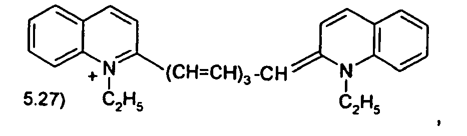 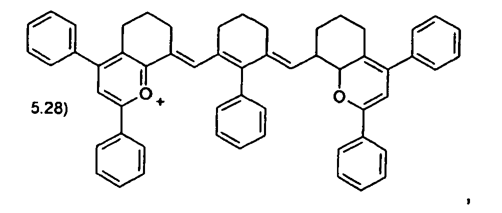 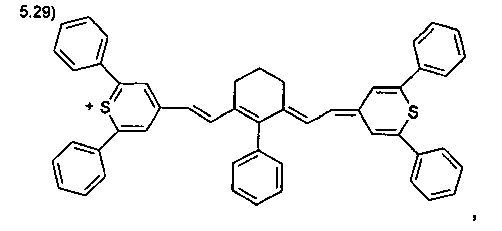 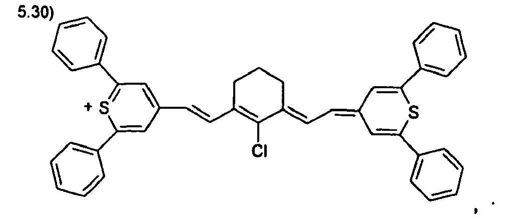 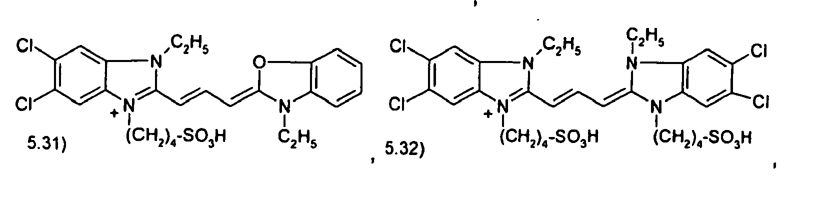 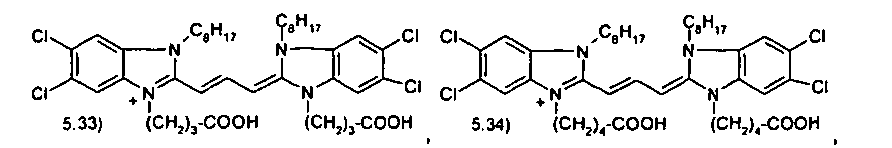 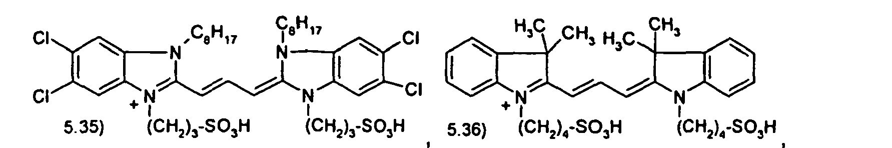 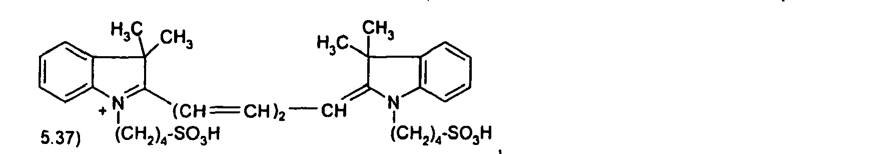 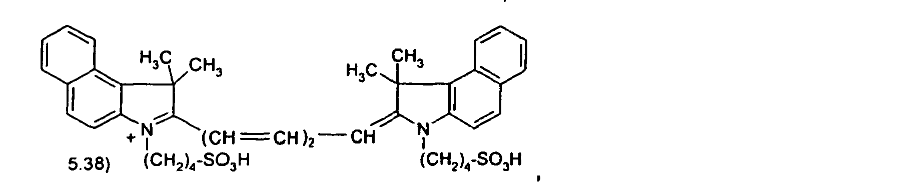 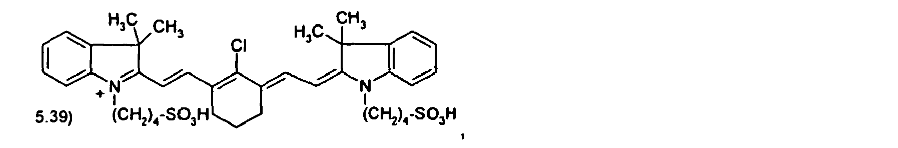 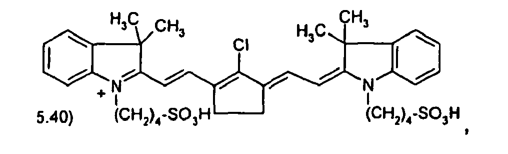 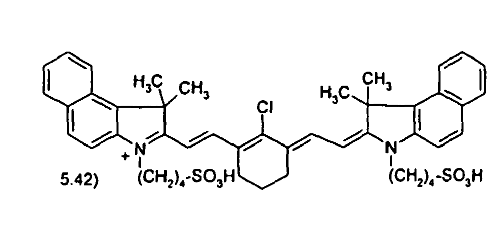 oder

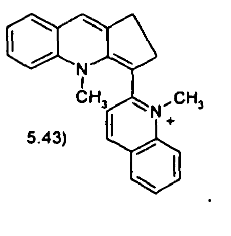

Bevorzugte Kationen von Azacarbocyaninfarbstoffen können durch die Formel V-3 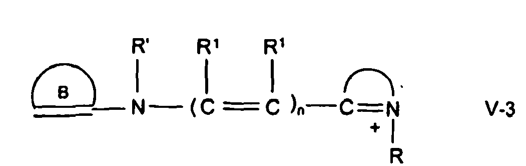 beschrieben werden, wobei
n 1 oder 2,
R' Wasserstoff oder Alkyl,
R Alkyl, Alkenyl, Cycloalkyl, Aryl oder Heteroaryl bedeutet
und
R¹ jeweils unabhängig voneinander H, Cl, Br, I, Alkyl, teilweise oder vollständig chloriertes Alkyl, Alkenyl, Cycloalkyl, Aryl, Heteroaryl, OAlkyl, OAryl, SAlkyl, SAryl, NHAlkyl, N(Alkyl)₂, C(O)H, C(O)Alkyl, C(O)Aryl, CN, N=N-Aryl, P(Aryl)₂, NHCOAlkyl oder NHCOAryl bedeutet.
Die jeweiligen Radikale R und/oder R¹ können jeweils miteinander oder mit einem Substituenten des Ringsystems mittels Einfach- oder Doppelbindungen verbunden sein.
Das Ringsystem, dargestellt durch 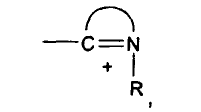 bedeutet einen Stickstoff enthaltenden ungesättigten mono-, bi- oder tricyclischen Heterocyclus mit 5 bis 13 Ringgliedern, wobei 1, 2 oder 3 N- und/oder 1 oder 2 S- oder O-Atome vorliegen können und der heterocyclische Rest ein- oder mehrfach durch Z, wie zuvor beschrieben, substituiert sein kann.

Das Ringsystem bedeutet vorzugsweise Pyridin, Chinolin, α-Pyran, γ-Thiopyran, Thiazol, Pyrrol, Imidazol oder Oxazol, die weiterhin an ein Phenyl kondensiert sein können. Der Ringschluss kann nicht nur zwischen Stickstoff und dem nebenstehenden Kohlenstoff bestehen, sondern auch zwischen Stickstoff und den in der Kette folgenden Kohlenstoff-Atomen oder den R¹-Resten erfolgen, wenn diese Kohlenstoff enthalten, oder zwischen Kohlenstoff-Atomen mit Bildung von aromatischen Systemen. Ein besonders bevorzugtes Ringsystem ist 3,3-Dimethyl-3H-indol. Das Ringsystem, dargestellt durch 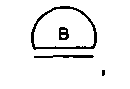 bedeutet einen ungesättigten mono- oder bicyclischen Carbocyclus mit 5 bis 14 Ringgliedern oder einen ungesättigten mono-, bi- oder tricyclischen Heterocyclus mit 5 bis 13 Ringgliedern, wobei 1, 2 oder 3 N- und/oder 1 oder 2 S- oder O-Atome vorliegen können und der carbo- oder heterocyclische Rest ein- oder mehrfach durch Z, wie zuvor beschrieben, substituiert sein kann.

Das Ringsystem bedeutet vorzugsweise Aryl.
n ist bevorzugt 1.
R¹ in Formel V-3 ist bevorzugt H oder Alkyl.
R ist in Formel V-3 bevorzugt Alkyl.

Besonders bevorzugte Kationen CAT⁺ aus der Gruppe der Azacarbocyaninfarbstoffe sind:

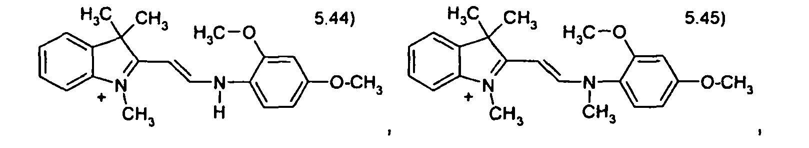

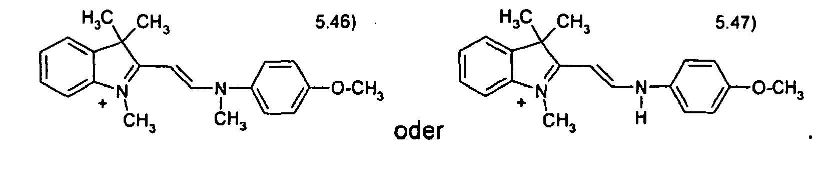

Bevorzugte Kationen von Diazacarbocyaninfarbstoffen können durch die Formel V-4 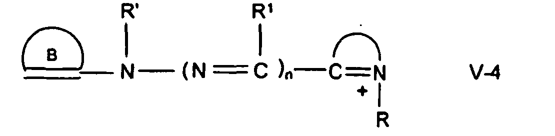 beschrieben werden, wobei
n 1,
R' Wasserstoff oder Alkyl,
R Alkyl, Alkenyl, Cycloalkyl, Aryl oder Heteroaryl bedeutet
und
R¹ jeweils unabhängig voneinander H, Cl, Br, I, Alkyl, teilweise oder vollständig chloriertes Alkyl, Alkenyl, Cycloalkyl, Aryl, Heteroaryl, OAlkyl, OAryl, SAlkyl, SAryl, NHAlkyl, N(Alkyl)₂, C(O)H, C(O)Alkyl, C(O)Aryl, CN, N=N-Aryl, P(Aryl)₂, NHCOAlkyl oder NHCOAryl bedeutet.

Die jeweiligen Radikale R und/oder R¹ können jeweils miteinander oder mit einem Substituenten des Ringsystems mittels Einfach- oder Doppelbindungen verbunden sein.

Das Ringsystern, dargestellt durch 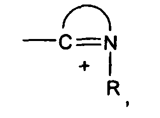 bedeutet einen Stickstoff enthaltenden ungesättigten mono-, bi- oder tricyclischen Heterocyclus mit 5 bis 13 Ringgliedern, wobei 1, 2 oder 3 N- und/oder 1 oder 2 S- oder O-Atome vorliegen können und der heterocyclische Rest ein- oder mehrfach durch Z, wie zuvor beschrieben, substituiert sein kann.

Das Ringsystem bedeutet vorzugsweise Pyridin, Chinolin, α-Pyran, γ-Thiopyran, Thiazol, Pyrrol, Imidazol oder Oxazol, die weiterhin an ein Phenyl kondensiert sein können. Der Ringschluss kann nicht nur zwischen Stickstoff und dem nebenstehenden Kohlenstoff bestehen, sondern auch zwischen Stickstoff und den in der Kette folgenden Kohlenstoff-Atomen oder den R¹-Resten erfolgen, wenn diese Kohlenstoff enthalten, oder zwischen Kohlenstoff-Atomen mit Bildung von aromatischen Systemen. Ein besonders bevorzugtes Ringsystem ist 3,3-Dimethyl-3H-indol.

Das Ringsystem, dargestellt durch 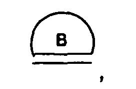 bedeutet einen ungesättigten mono- oder bicyclischen Carbocyclus mit 5 bis 14 Ringgliedern, der ein- oder mehrfach durch Z, wie zuvor beschrieben, substituiert sein kann, vorzugsweise Aryl.
R¹ in Formel V-4 ist bevorzugt H oder Alkyl. R in Formel V-4 ist bevorzugt Alkyl.
Besonders bevorzugte Kationen CAT⁺ aus der Gruppe der Diazacarbocyaninfarbstoffe sind: 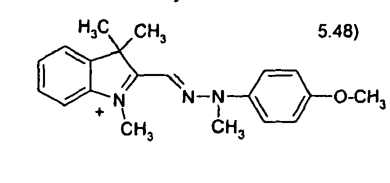 oder 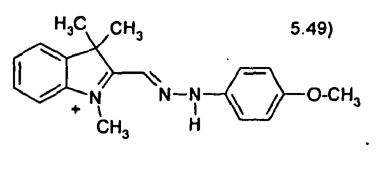 Bevorzugte Kationen von Triazacarbocyaninfarbstoffen können durch die Formel V-5 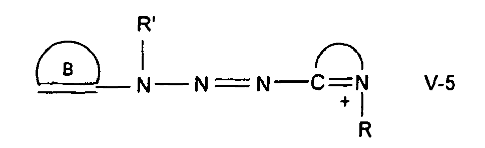 beschrieben werden, wobei
R' Wasserstoff oder Alkyl und
R Alkyl, Alkenyl, Cycloalkyl, Aryl oder Heteroaryl bedeutet.
Die jeweiligen Radikale R und/oder R' können jeweils mit einem Substituenten des Ringsystems mittels Einfach- oder Doppelbindungen verbunden sein.
Das Ringsystem, dargestellt durch 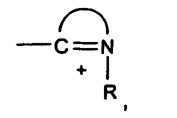 bedeutet einen Stickstoff enthaltenden ungesättigten mono-, bi- oder tricyclischen Heterocyclus mit 5 bis 13 Ringgliedern, wobei 1, 2 oder 3 N- und/oder 1 oder 2 S- oder O-Atome vorliegen können und der heterocyclische Rest ein- oder mehrfach durch Z, wie zuvor beschrieben, substituiert sein kann.

Das Ringsystem bedeutet vorzugsweise Pyridin, Chinolin, α-Pyran, γ-Thiopyran, Thiazol, Pyrrol, Imidazol oder Oxazol, die weiterhin an ein Phenyl kondensiert sein können. Der Ringschluss kann nicht nur zwischen Stickstoff und dem nebenstehenden Kohlenstoff bestehen, sondern auch zwischen Stickstoff und den in der Kette folgenden Kohlenstoff-Atomen oder den R¹-Resten erfolgen, wenn diese Kohlenstoff enthalten, oder zwischen Kohlenstoff-Atomen mit Bildung von aromatischen Systemen. Ein besonders bevorzugtes Ringsystem ist Benzothiazol.

Das Ringsystem, dargestellt durch 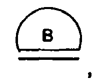 bedeutet einen ungesättigten mono- oder bicyclischen Carbocyclus mit 5 bis 14 Ringgliedern, der ein- oder mehrfach durch Z, wie zuvor beschrieben, substituiert sein kann, vorzugsweise Aryl.
R ist in Formel V-5 bevorzugt Alkyl.

Ein besonders bevorzugtes Kation CAT⁺ aus der Gruppe der Triazacarbocyaninfarbstoffe ist:

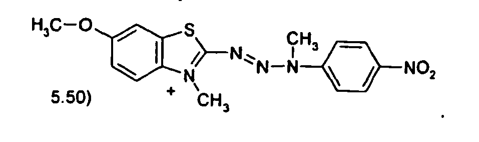

Bevorzugte Kationen von Hemicyaninfarbstoffen können durch die Formel V-6 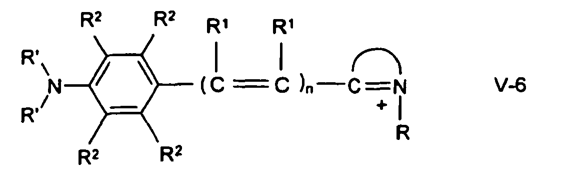 beschrieben werden, wobei
n 1, 2, 3, 4 oder 5,
R' jeweils unabhängig voneinander H oder Alkyl,
R Alkyl, Alkenyl, Cycloalkyl, Aryl oder Heteroaryl,
R² jeweils unabhängig voneinander H, Alkyl, NO₂, NH₂, NHAlkyl oder N(Alkyl)₂
und
R¹ jeweils unabhängig voneinander H, Cl, Br, I, Alkyl, teilweise oder vollständig chloriertes Alkyl, Alkenyl, Cycloalkyl, Aryl, Heteroaryl, OAlkyl, OAryl, SAlkyl, SAryl, NHAlkyl, N(Alkyl)₂, C(O)H, C(O)Alkyl, C(O)Aryl, CN, N=N-Aryl, P(Aryl)₂, NHCOAlkyl oder NHCOAryl bedeutet.

Die jeweiligen Radikale R, R¹ und/oder R² können jeweils miteinander oder mit einem Substituenten des Ringsystems mittels Einfach- oder Doppelbindungen verbunden sein. Für den Auszug der Formel 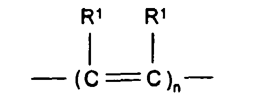 mit n=2 bedeutet das, dass sich ein Cyclohexen in der Verbindung befinden kann, wie beispielsweise 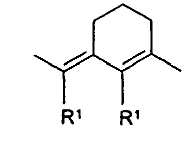 oder 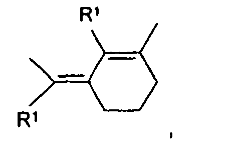 wobei das Cyclohexen gegebenenfalls weiter durch Z, wie zuvor beschrieben, substituiert sein kann.

Das Ringsystem, dargestellt durch 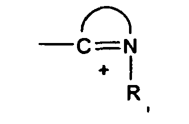 bedeutet einen ungesättigten mono-, bi- oder tricyclischen Heterocyclus mit 5 bis 13 Ringgliedern, wobei 1, 2 oder 3 N- und/oder 1 oder 2 S- oder O-Atome vorliegen können und der heterocyclische Rest ein- oder mehrfach durch Z, wie zuvor beschrieben, substituiert sein kann.

Das Ringsystem bedeutet vorzugsweise Pyridin, Chinolin, Thiazol, Pyrrol, Imidazol oder Oxazol, die weiterhin an ein Phenyl kondensiert sein können. Der Ringschluss kann nicht nur zwischen Stickstoff und dem nebenstehenden Kohlenstoff bestehen, sondern auch zwischen Stickstoff und den in der Kette folgenden Kohlenstoff-Atomen oder den R¹-Resten erfolgen, wenn diese Kohlenstoff enthalten, oder zwischen Kohlenstoff-Atomen mit Bildung von aromatischen Systemen.

Besonders bevorzugte Ringsysteme sind 3,3-Dimethyl-3H-indol, Benzothiazol, Benzoxazol, Pyridin oder Chinolin, die gegebenenfalls weiter durch Z substituiert sein können. Z ist hierbei besonders bevorzugt Alkyl.
n ist bevorzugt 1, 2 oder 3.
R¹ in Formel V-6 ist bevorzugt Wasserstoff.
R² ist bevorzugt Wasserstoff oder Alkyl.
R in Formel V-6 ist bevorzugt Alkyl.

Besonders bevorzugte Kationen CAT⁺ aus der Gruppe der Hemicyaninfarbstoffe sind: 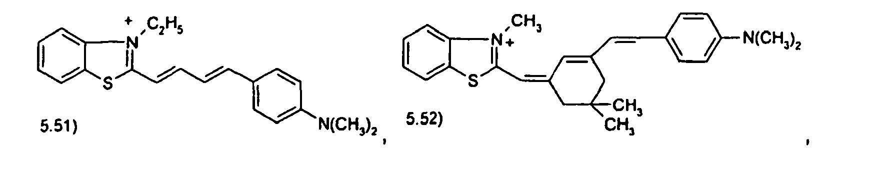 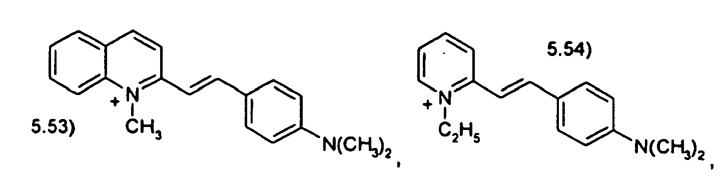 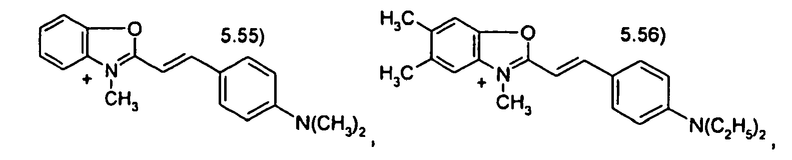 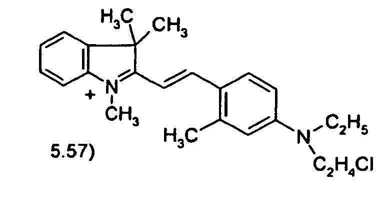 oder

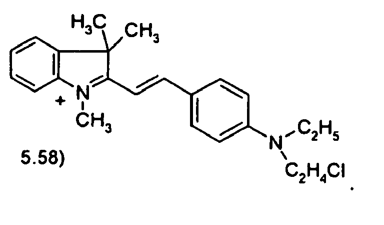

Bevorzugte Kationen von Diazahemicyaninfarbstoffen können durch die Formel V-7 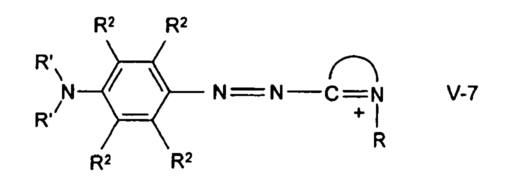 beschrieben werden, wobei
R' jeweils unabhängig voneinander H oder Alkyl,
R jeweils unabhängig voneinander Alkyl, Alkenyl, Cycloalkyl, Aryl oder Heteroaryl und
R² jeweils unabhängig voneinander H, Alkyl, NO₂, NH₂, NHAlkyl oder N(Alkyl)₂ bedeutet.

Die jeweiligen Radikale R, R' und/oder R² können jeweils miteinander oder mit einem Substituenten des Ringsystems mittels Einfach- oder Doppelbindungen verbunden sein.

Das Ringsystem, dargestellt durch 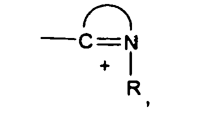 bedeutet einen ungesättigten mono-, bi- oder tricyclischen Heterocyclus mit 5 bis 13 Ringgliedern, wobei 1, 2 oder 3 N- und/oder 1 oder 2 S- oder O-Atome vorliegen können und der heterocyclische Rest ein- oder mehrfach durch Z, wie zuvor beschrieben, substituiert sein kann.

Das Ringsystem bedeutet vorzugsweise Pyridin, Chinolin, Thiazol, Pyrrol, Imidazol oder Oxazol, die weiterhin an ein Phenyl kondensiert sein können. Der Ringschluss kann nicht nur zwischen Stickstoff und dem nebenstehenden Kohlenstoff bestehen, sondern auch zwischen Stickstoff und den in der Kette folgenden Kohlenstoff-Atomen oder den R¹-Resten erfolgen, wenn diese Kohlenstoff enthalten, oder zwischen Kohlenstoff-Atomen mit Bildung von aromatischen Systemen.

Besonders bevorzugte Ringsysteme sind Thiazol, Benzothiazol, Imidazol, Pyridin, Indazol oder 1,2,4-Triazol, die gegebenenfalls weiter durch Z substituiert sein können. Z ist hierbei besonders bevorzugt Alkyl.
R² ist bevorzugt Wasserstoff.
R ist jeweils unabhängig in Formel V-7 bevorzugt Alkyl oder durch CONH₂ substituiertes Alkyl.

Besonders bevorzugte Kationen CAT⁺ aus der Gruppe der Diazahemicyaninfarbstoffe sind:

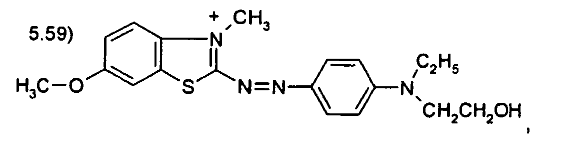

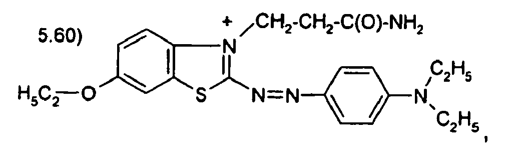

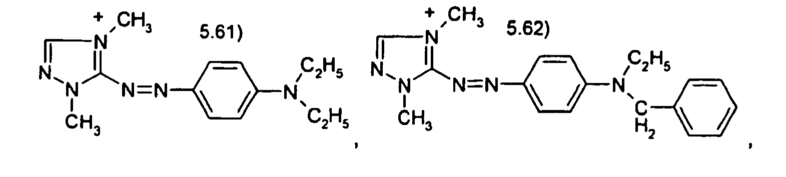

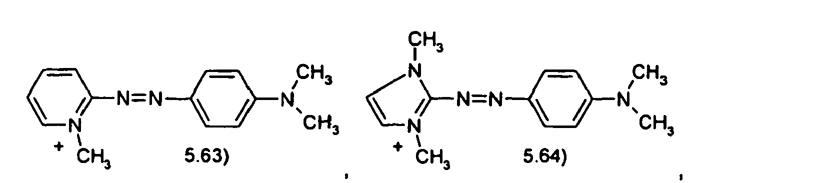

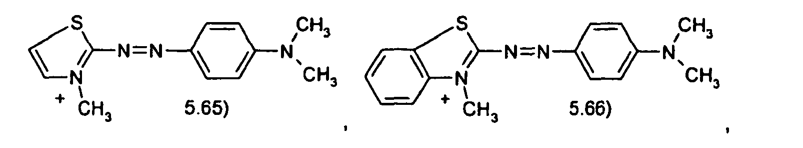

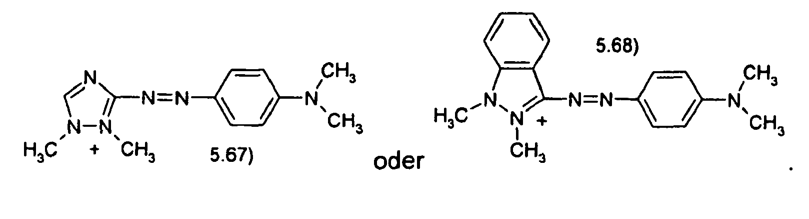

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Styrylfarbstoffs ist.

Bevorzugte Kationen können durch die Formel VI 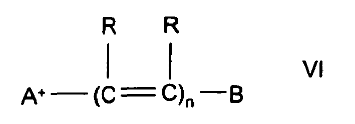 beschrieben werden, worin A⁺ ein positiv geladener heterocyclischer Rest, wie zuvor bei Heteroaryl definiert, ist, der teilweise gesättigt sein kann, und B ein carbo- oder heterocyclischer Rest bedeutet, wobei jeweils eine oder mehrere Doppelbindungen enthalten sind,
n 1, 2 oder 3 und
R jeweils unabhängig voneinander H, F, Cl, Br oder Alkyl bedeutet, wobei nebeneinanderstehende R gegebenenfalls einen ungesättigten mono- oder bicyclischen Rest bilden können.
Für den Auszug der Formel 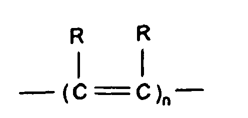 mit n=2 bedeutet das, dass sich ein Cyclopenten in der Verbindung befinden kann, wie beispielsweise 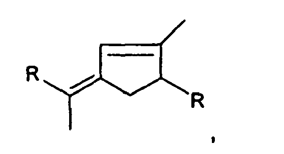 wobei das Cyclopenten gegebenenfalls weiter durch Z, wie zuvor beschrieben, substituiert sein kann.
Hemicyaninfarbstoffe, wie zuvor definiert, sind ausgeschlossen.
R bedeutet bevorzugt H.

Bevorzugte Kationen CAT⁺ aus der Gruppe der Styrylfarbstoffe sind: 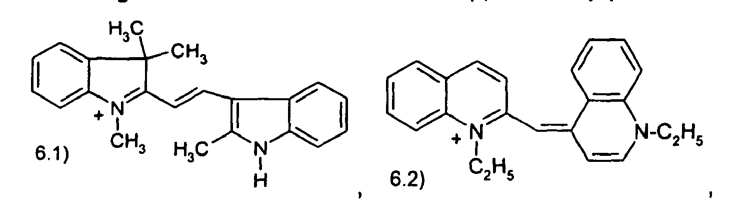 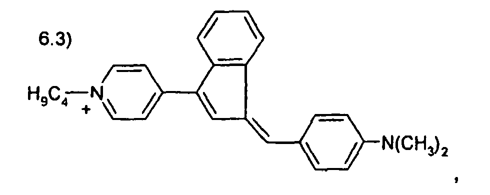 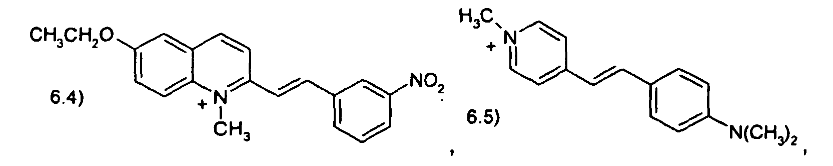 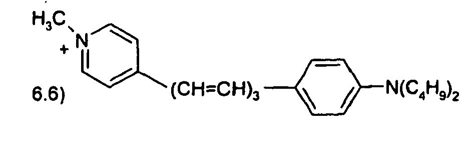 oder

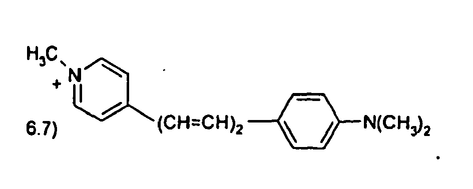

Erfindungsgemäß ist eine Gruppe von Verbindungen der Formell I bevorzugt, wobei Y⁻ jeweils eine der bei Formel I angegebenen oder bevorzugt beschriebenen Bedeutungen hat und worin CAT⁺ ein Kation eines kationischen Azofarbstoffs ist.

Bevorzugte Kationen können durch die Formel VII 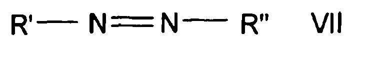 beschrieben werden,
worin R' und R" jeweils unabhängig voneinander Aryl oder Heteroaryl ist, wie zuvor definiert, und einer der beiden aromatischen Kerne positiv geladen ist.

Enthält das Farbstoffmolekül 2 Azogruppen, so entsteht ein Bisazofarbstoff, bei 3 Azogruppen ein Triazofarbstoff. Diazahemicyaninfarbstoffe sind hierbei ausgeschlossen.
R' ist besonders bevorzugt durch N₂⁺-Substituiertes Phenyl, wobei der Phenylring weiter durch Alkyl oder OAlkyl substituiert sein kann, Thiazolyl oder Phenazinyl.
R ist besonders bevorzugt Aryl oder Thienyl.

Besonders bevorzugte Kationen CAT⁺ aus der Gruppe der Azofarbstoffe sind: 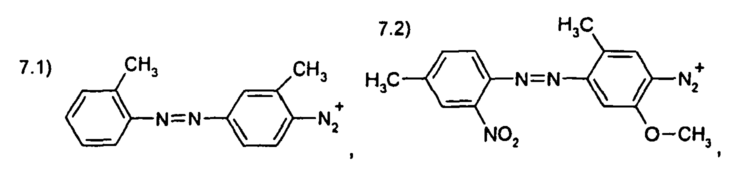 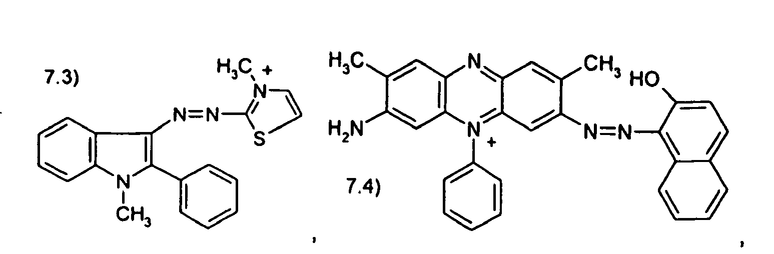 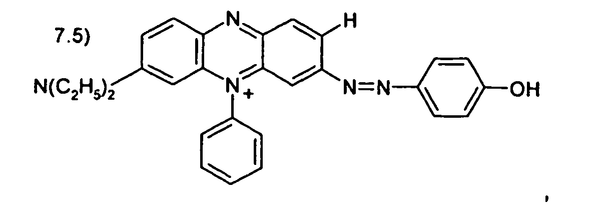 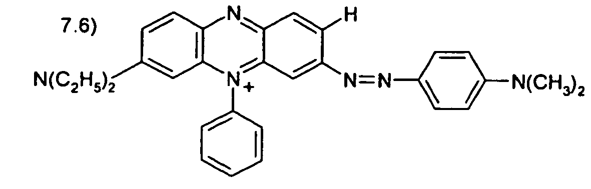 oder

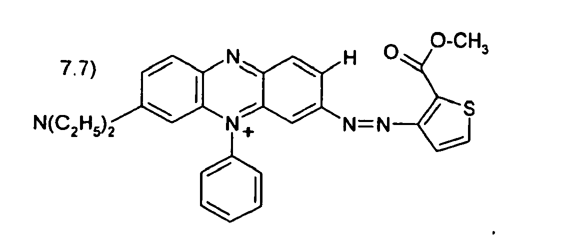

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Tetrazoliumfarbstoffs ist.

Bevorzugte Kationen können durch die Formel VIII 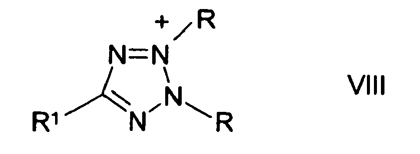 beschrieben werden,

R jeweils unabhängig voneinander Aryl oder Heteroaryl und R¹ Wasserstoff, Alkyl, Cycloalkyl, Aryl, Heteroaryl, Alkyl-Aryl, Alkenyl, Cycloalkenyl, OH, SH, OAlkyl, SAlkyl, SO₂-Alkyl, SO₂-Aryl, COOH, COOAlkyl. COOAryl, C(O)-Aryl, C(O)-Alkyl, C(O)-Heteroaryl, C(O)NHAlkyl, C(O)NHAryl, C(O)N(Alkyl)(Aryl), C(O)N(Alkyl)₂, NH₂, NHAlkyl, N(Alkyl)₂, NHAryl, N=NOH, N=NOAlkyl, N=N-Aryl, NHCOAlkyl, NHCOAryl, NHSO₂Alkyl, NHSO₂Aryl, CN, F, Cl oder Br bedeutet.

Besonders bevorzugt ist R¹ Phenyl und R jeweils unabhängig voneinander Aryl oder Heteroaryl.

Nebenstehende Substituenten R oder R¹ können miteinander duch Einfach- oder Doppelbindungen verbunden sein.

Besonders bevorzugte Kationen CAT⁺ aus der Gruppe der Tetrazoliumfarbstoffe sind: 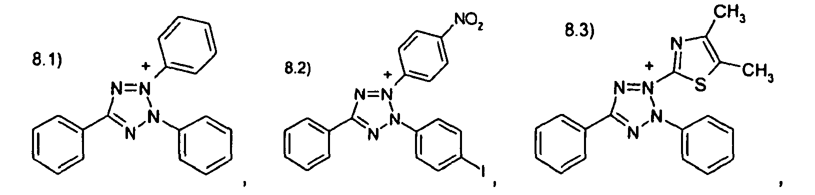 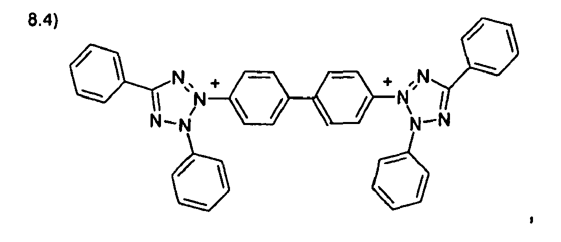 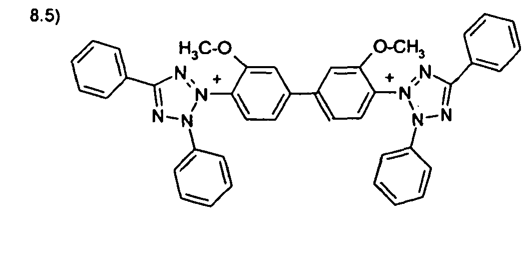 oder

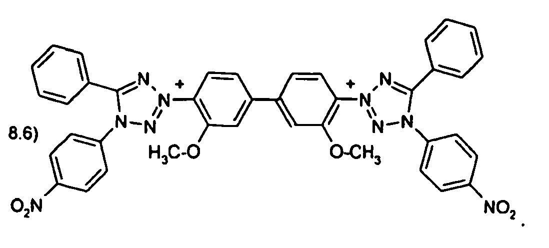

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Pyryliumfarbstoffs ist.

Bevorzugte Pyrylium-Kationen können durch die Formel IX 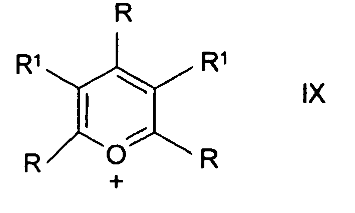 beschrieben werden, worin
R jeweils unabhängig voneinander H, Alkyl, Cycloalkyl, Aryl, Heteroaryl, OH, OAlkyl, NH₂, NHAlkyl, N(Alkyl)₂, COOH, COOAlkyl, Cl oder Br und
R¹ jeweils unabhängig voneinander H, Alkyl, Cycloalkyl, Aryl, Heteroaryl, Alkyl-Aryl, Alkenyl, OH, OAlkyl, COOAlkyl, COOAryl, OC(O)-Aryl, OC(O)-Alkyl, C(O)-H, CONH₂, C(O)NHAlkyl, C(O)NHAryl, C(O)Aryl, C(O)Alkyl, NHAlkyl, N(Alkyl)₂, NHCOAlkyl, NHCOCF₃, NHCOAryl, NHCOOAlkyl, NO₂, Cl oder Br bedeutet.
Besonders bevorzugt ist R Phenyl.

Nebenstehende Substituenten R oder R¹ können miteinander duch Einfach- oder Doppelbindungen verbunden sein.

Eine bevorzugte Gruppe von Kationen der Formel IX sind Kationen, wobei R und R¹ einen ankondensierten Phenylring bilden, sogenannte Benzopyryliumsalze der Formel X 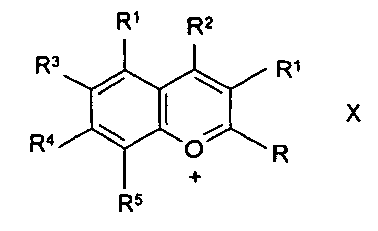 worin,
R Wasserstoff, Alkyl, Cycloalkyl, Aryl, Heteroaryl, OH, OAlkyl, NH₂, NHAlkyl, N(Alkyl)₂, COOH, COOAlkyl, Cl oder Br,
R¹ jeweils unabhängig voneinander H, Alkyl, Cycloalkyl, Aryl, Heteroaryl, OH, OAlkyl, NHAlkyl, N(Alkyl)₂, NHCOAryl, NHCOOAlkyl, Cl oder Br,
R² Wasserstoff, Alkyl, CH₂-Cl, Cycloalkyl, Aryl, Alkyl-Aryl, Heteroaryl, Alkenyl, Cycloalkenyl, Alkinyl, OH, OAlkyl, SAlkyl, COOAlkyl, COOAryl, C(O)H, C(O)Aryl, C(O)Alkyl, C(O)Alkenyl, NH₂, NHAlkyl, N(Alkyl)₂, NHAryl, Cl oder Br,
R³ Wasserstoff, Alkyl, Cycloalkyl, Aryl, Alkenyl, OH, OAlkyl, C(O)Alkyl, C(O)Alkenyl, CN, C(O)Aryl, OC(O)Alkyl, OC(O)Aryl, NHCOAlkyl, NHCOCF₃, NO₂, F, Cl, Br oder I,
R⁴ Wasserstoff, Alkyl, Cycloalkyl, Cycloalkenyl, Alkenyl, Aryl, OH, OAlkyl, NH₂, NHAlkyl, N(Alkyl)₂, NHAryl, OC(O)Alkyl, OC(O)Aryl, CN, NO₂, Cl, Br oder I und
R⁵ Wasserstoff, Alkyl, Cycloalkyl, Aryl, Alkyl-Aryl, NHCOAlkyl, NHCOCF₃, OH, OAlkyl, CN, NO₂, Cl oder Br
bedeuten.

In Formel X ist R besonders bevorzugt Aryl, R² besonders bevorzugt Alkyl und R¹, R³ bis R⁵ besonders bevorzugt H.

Nebenstehende Substituenten R, R¹. R², R³, R⁴ oder R⁵ können miteinander mittels Einfach- oder Doppelbindungen verbunden sein. Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Thiopyryliumfarbstoffs ist.

Bevorzugte Thiopyrylium-Kationen können durch die Formel XI 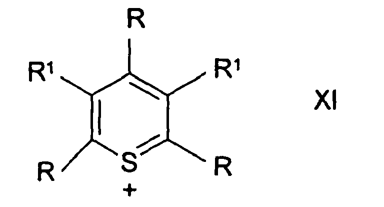 beschrieben werden, worin
R jeweils unabhängig voneinander H, Alkyl, Cycloalkyl, Aryl, Alkyl-Aryl, Alkenyl, Alkinyl, Heteroaryl, OH, OAlkyl, SAlkyl, SeAlkyl, NH₂, NHAlkyl, N(Alkyl)₂, NHAryl, N(Alkyl)(Aryl), N(Aryl)₂, C(O)Alkyl, C(O)Aryl, COOH, COOAlkyl, CONH₂, CONHAlkyl, CON(Alkyl)₂, CN, Cl oder Br und
R¹ jeweils unabhängig voneinander H, Alkyl, Cycloalkyl, Aryl, Heteroaryl, Alkyl-Aryl, Alkenyl, OH, OAlkyl, SAlkyl, COOH, COOAlkyl, COOAryl, OC(O)-Aryl, OC(O)-Alkyl, CONH₂, CONHAlkyl, CONHAryl, C(S)Alkyl, C(O)Aryl, C(O)Alkyl, NH₂, NHAlkyl, N(Alkyl)₂, NHAryl, CN, Cl, Br oder I bedeutet.

Besonders bevorzugt ist R jeweils unabhängig voneinander Phenyl oder Wasserstoff und R¹ Wasserstoff.

Nebenstehende Substituenten R oder R¹ können miteinander duch Einfach- oder Doppelbindungen verbunden sein.

Eine bevorzugte Gruppe von Kationen der Formel XI sind Kationen, wobei R und R¹ einen ankondensierten Phenylring bilden, sogenannte Benzothiopyryliumsalze der Formel XII 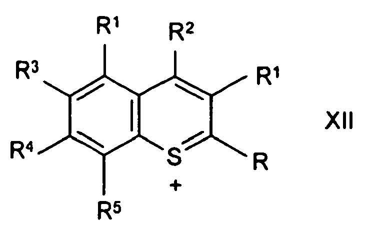 worin,
R Wasserstoff, Alkyl, Cycloalkyl, Aryl, Alkenyl, OAlkyl, SAlkyl, NH₂, NHAlkyl, NHHeteroaryl, N(Alkyl)₂, COOH, COOAlkyl, Cl, Br oder I,
R¹ jeweils unabhängig voneinander H, Alkyl, Cycloalkyl, Alkenyl, OH, OAlkyl, SAlkyl, NHAlkyl, N(Alkyl)₂, Cl oder Br,
R² Wasserstoff, Alkyl, CH₂-Cl, Cycloalkyl, Aryl, Alkyl-Aryl, Heteroaryl, Alkenyl, Cycloalkenyl, OH, OAlkyl, SAlkyl, COOH, COOAlkyl, COOAryl, OC(O)Alkyl, NH₂, NHAlkyl, N(Alkyl)₂, NHAryl, CN, F, Cl oder Br,
R³ Wasserstoff, Alkyl, Cycloalkyl, OH, OAlkyl, CN, NO₂, F, Cl, Br oder I,
R⁴ Wasserstoff, Alkyl, Cycloalkyl, OAlkyl, NH₂, NHAlkyl, N(Alkyl)₂, CN, F, Cl, Br oder I und
R⁵ Wasserstoff, Alkyl, Cycloalkyl, OH, OAlkyl, CN, F, Cl oder Br bedeuten.
Nebenstehende Substituenten R, R¹, R², R³, R⁴ oder R⁵ können miteinander mittels Einfach- oder Doppelbindungen verbunden sein.
In Formel XII ist R besonders bevorzugt Aryl.

Besonders bevorzugte Kationen CAT⁺ aus der Gruppe der Pyrylium-Benzopyrylium- und Thiopyryliumfarbstoffe sind:

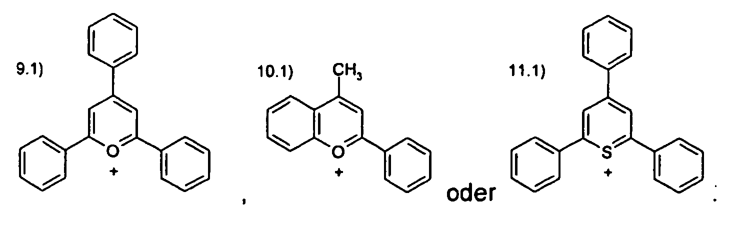

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Thiazinfarbstoffs ist.

Bevorzugte Kationen können durch die Formel XIII 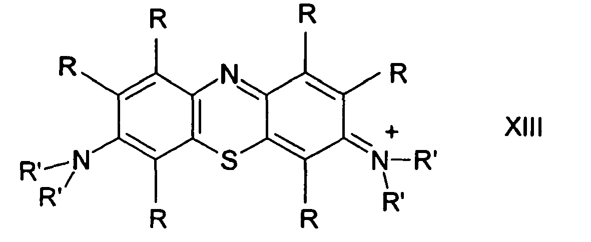 beschrieben werden, wobei
R jeweils unabhängig voneinander H, Alkyl, OAlkyl oder NO₂, und
R' jeweils unabhängig voneinander H, Alkyl, teilweise durch Hydroxy substituiertes Alkyl, teilweise durch Br oder COOH substituiertes Alkyl, C(O)Alkyl, COOH oder COOAlkyl
bedeutet.
R ist besonders bevorzugt H oder Alkyl. R' ist besonders bevorzugt H oder Alkyl.

Besonders bevorzugte Kationen CAT⁺ aus der Gruppe der Thiazinfarbstoffe sind: 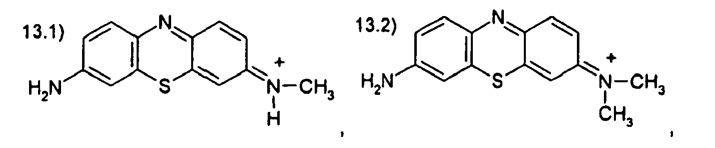 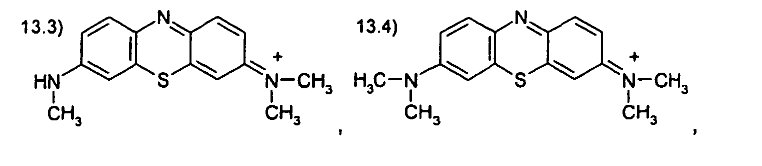 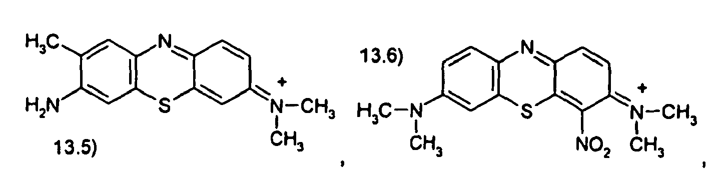 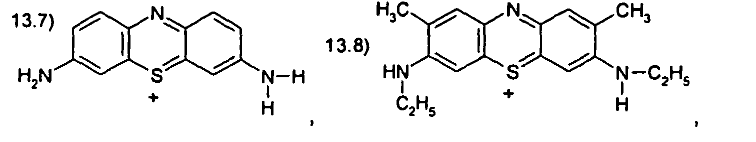 oder

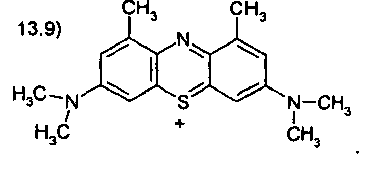

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Oxazinfarbstoffs ist.

Bevorzugte Kationen können durch die Formel XIV 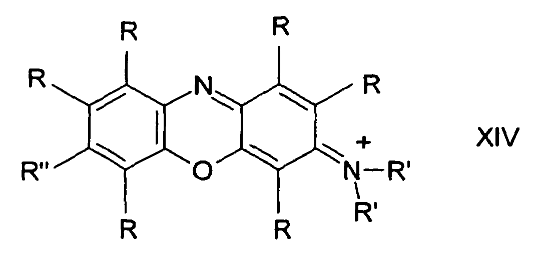 beschrieben werden, worin
R jeweils unabhängig voneinander H, Alkyl, Alkenyl, OH, OAlkyl, COOH, CO0Alkyl, CONH₂, CONHAlkyl, CON(Alkyl)₂, NH₂, NHAlkyl oder N(Alkyl)₂, R' jeweils unabhängig voneinander H, Alkyl oder teilweise durch CONH₂, CONHAlkyl, C(O)N(Alkyl)₂, COOH oder COOHeteroaryl substituiertes Alkyl und
R" Wasserstoff, Alkyl, NH₂, NHAlkyl, N(Alkyl)₂, NHAryl, NHHeteroaryl, SAryl, SO₂-Aryl, S-C(O)-Alkyl, SC(N)NH₂, oder teilweise durch CONH₂, CONHAlkyl, CON(Alkyl)₂, COOH oder COOHeteroaryl substituiertes Alkyl bedeutet.
R ist besonders bevorzugt H, Alkyl, OH oder COOH, wobei nebeneinanderstehende Substituenten R auch gemeinsam einen ankondensierten Phenylring bilden können. R' ist besonders bevorzugt H oder Alkyl. R" ist bevorzugt H, NH₂, NHAlkyl, N(Alkyl)₂ oder OH.

Besonders bevorzugte Kationen CAT⁺ aus der Gruppe der Oxazinfarbstoffe sind: 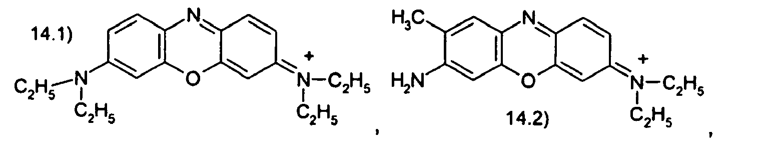 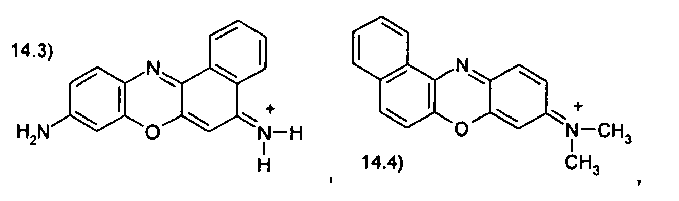 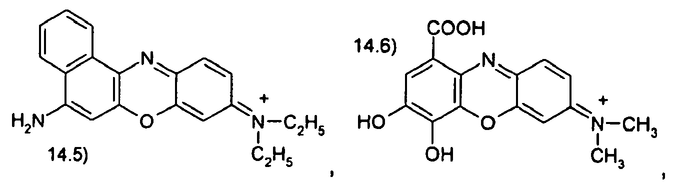 oder

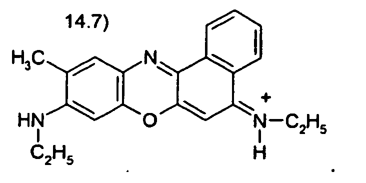

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Triarylmethanfarbstoffs ist.

Bevorzugte Kationen können durch die Formel XV 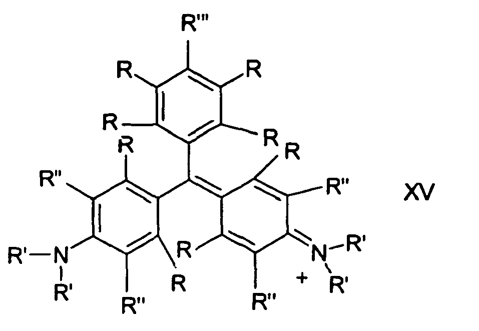 beschrieben werden, worin
R jeweils unabhängig voneinander H, Alkyl, COOH, Cl oder F,
R' jeweils unabhängig voneinander H, Alkyl, teilweise durch OH substituiertes Alkyl, Alkenyl, Alkinyl, Aryl oder C(O)Alkyl,
R" jeweils unabhängig voneinander H, Alkyl, Aryl, NH₂, NHAlkyl, N(Alkyl)₂, NHAryl, N(Alkyl)(Aryl), OH, OAlkyl, COOH, COOAlkyl, SO₂-Alkyl, CN, NO₂, F, Cl, Br oder I und
R'" Wasserstoff, Alkyl, Aryl, Heteroaryl, NH₂, NHAlkyl, N(Alkyl)₂, NHAryl, N(Alkyl)(Aryl), OH, OAlkyl, COOH, COOAlkyl, COO-Heteroaryl, CONHAlkyl, SO₂-Alkyl, SO₂H, SO₃H, SO₃Alkyl, CN, NO₂, F, Cl, Br, I, N₃ oder NCS
bedeutet.
R ist besonders bevorzugt H oder Alkyl, wobei nebeneinanderstehende Substituenten R und R" auch gemeinsam einen ankondensierten Phenylring bilden können. R' ist besonders bevorzugt H oder Alkyl.

Besonders bevorzugte Kationen CAT⁺ aus der Gruppe der Triarylmethanfarbstoffe sind: 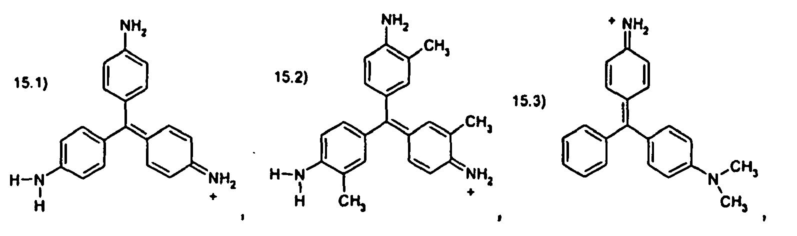 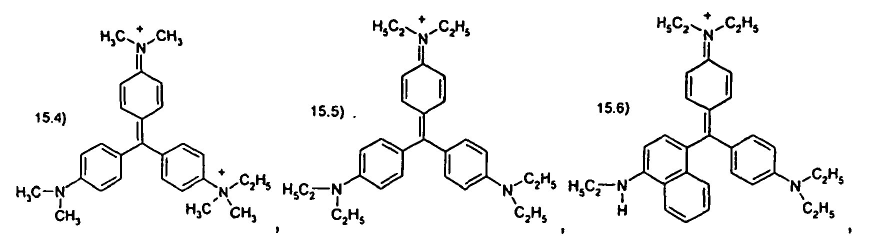 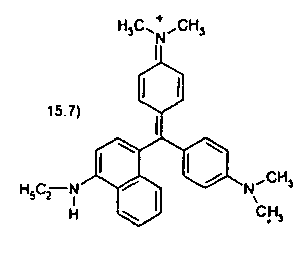 oder 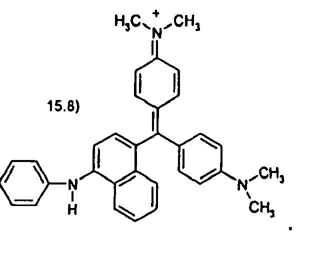 Weitere bevorzugte Kationen von Triarylmethanfarbstoffen sind 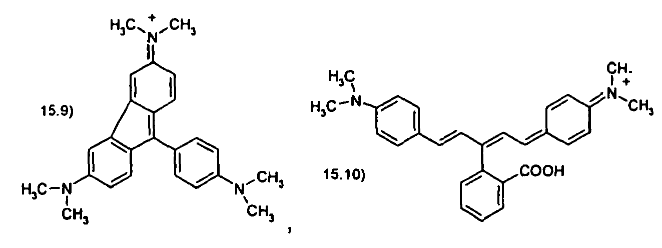 oder

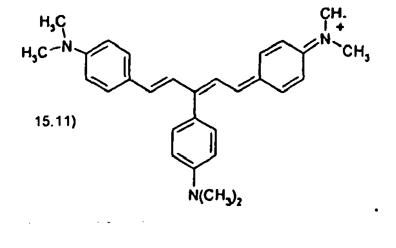

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Diarylmethanfarbstoffs ist.

Bevorzugte Kationen können durch die Formel XVI 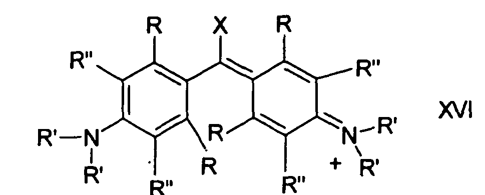 beschrieben werden, worin
R jeweils unabhängig voneinander H, Alkyl oder COOH,
R' jeweils unabhängig voneinander H, Alkyl, teilweise durch OH substituiertes Alkyl, Alkyl-Aryl oder Aryl,
R" jeweils unabhängig voneinander H, Alkyl, Aryl, NH₂, NHAlkyl, N(Alkyl)₂, NHAryl, N(Alkyl)(Aryl), OH, OAlkyl, COOH, CN, F, Cl oder Br und
X Wasserstoff, Alkyl, Alkenyl, Heteroaryl, SAlkyl, OH, OAlkyl, CN, F, Cl oder Br
bedeutet.
R ist besonders bevorzugt H. R' ist besonders bevorzugt Alkyl. R" ist besonders bevorzugt H.
X ist besonders bevorzugt H oder Alkenyl, wobei die Alkenylkette das Bindeglied zu einem zweiten Diarylmethanfarbstoff darstellen kann.

Besonders bevorzugte Kationen CAT⁺ aus der Gruppe der Diarylmethanfarbstoffe sind: 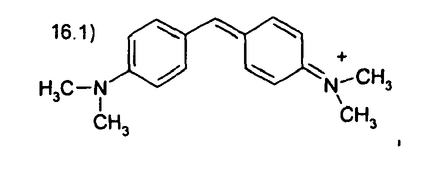 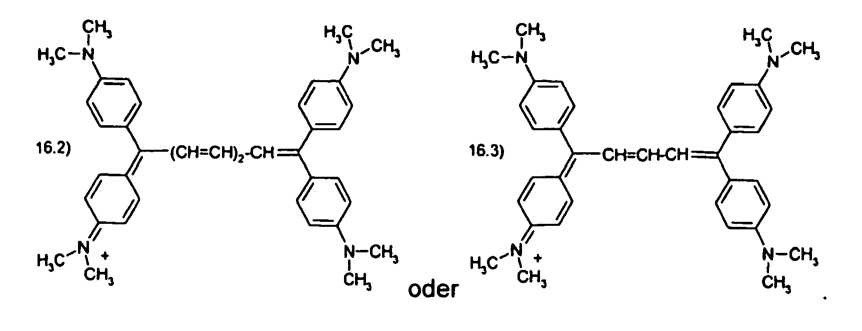 Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Acridinfarbstoffs ist.

Bevorzugte Kationen können durch die Formel XVII 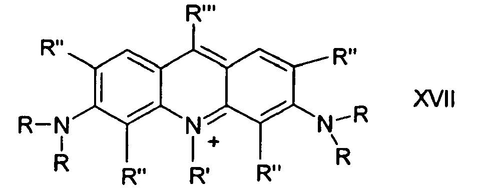 beschrieben werden, worin
R jeweils unabhängig voneinander H, Alkyl, Alkyl-Aryl, C(O)CH₂Cl oder C(O)Alkyl bedeutet,
NRR in Formel XVII auch N=N-Aryl bedeuten kann,
R' jeweils unabhängig voneinander H, Alkyl, Alkenyl, Alkinyl, Aryl, Heteroaryl, Alkyl-Aryl oder teilweise durch COOH oder CONHAryl substituiertes Alkyl,
R" jeweils unabhängig voneinander H, Alkyl, Aryl, Alkyl-Aryl, NHCOAlkyl oder NHCOAryl und
R"' Wasserstoff, Alkyl, Alkyl-Aryl, Aryl, Heteroaryl, SAlkyl, oder CN bedeutet.
R ist besonders bevorzugt H oder Alkyl. R' ist besonders bevorzugt H oder Alkyl. R" ist besonders bevorzugt H.
R"' ist besonders bevorzugt H.

Besonders bevorzugte Kationen CAT⁺ aus der Gruppe der Acridinfarbstoffe sind: 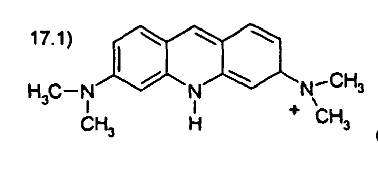 oder

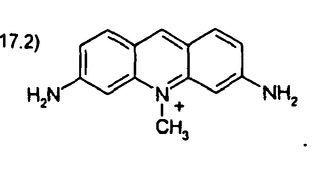

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Chinolinfarbstoffs ist.

Bevorzugte Kationen können durch die Formel XVIII 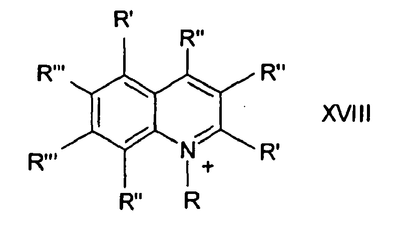 beschrieben werden, worin
R jeweils unabhängig voneinander Alkyl, Alkenyl, Aryl, Alkyl-Aryl, CH₂COOH oder CH₂COAlkyl,
R' jeweils unabhängig voneinander H, Alkyl, Alkenyl, teilweise durch Heteroaryl substituiertes Alkenyl, Alkinyl, Aryl, Heteroaryl oder Alkyl-Aryl,
R" jeweils unabhängig voneinander H, Alkyl, Alkenyl, teilweise durch Heteroaryl substituiertes Alkenyl, Aryl, Alkyl-Aryl, OH, OAlkyl, SAlkyl, NH₂, NHAlkyl, NHAryl, COOH, COOAlkyl, F, Cl, Br oder I und
R"' Wasserstoff, Alkyl, OAlkyl, CN oder NO₂
bedeutet.

Nebenstehende Substituenten R, R', R" oder R"' können miteinander mittels Einfach- oder Doppelbindung verbunden sein.

Nebenstehende Substituenten R und R" in Position 3 und 4 des Chinolingerüsts bilden bevorzugt einen Phenylring, der gegebenenfalls durch R, R' oder R" substituiert sein kann.

Besonders bevorzugte Kationen CAT⁺ aus der Gruppe der Chinolinfarbstoffe sind: 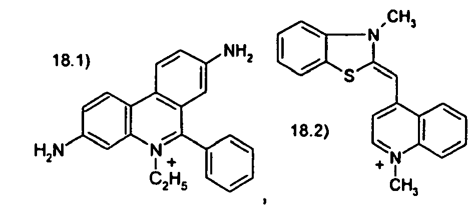 oder

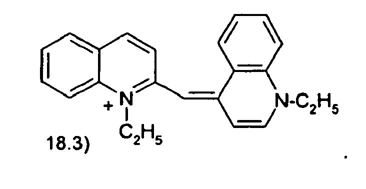

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Iso-Chinolinfarbstoffs ist.

Bevorzugte Kationen können durch die Formel XIX 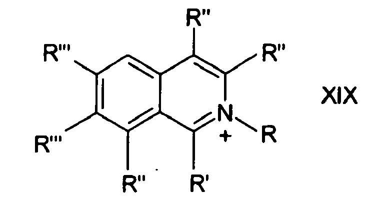 beschrieben werden, worin
R jeweils unabhängig voneinander Alkyl, Alkenyl oder CH₂COAlkyl,
R' jeweils unabhängig voneinander H, Alkyl, Alkenyl, Alkinyl, Aryl, Heteroaryl oder Alkyl-Aryl,
R" jeweils unabhängig voneinander H, Alkyl, Alkenyl, OAlkyl, NH₂ oder NHAlkyl und
R"' Wasserstoff, Alkyl, OAlkyl, NH₂, NHCO-Alkenyl, CN oder NO₂ bedeutet.
Nebenstehende Substituenten R und R" in Position 3 und 4 des Iso-Chinolingerüsts bilden bevorzugt einen Phenylring, der gegebenenfalls durch R, R' oder R" substituiert sein kann.
R bedeutet bevorzugt Alkyl. R' bedeutet bevorzugt H oder Aryl. R" bedeutet bevorzugt H oder OAlkyl. R"' bedeutet bevorzugt NH₂, OAlkyl oder NHCO-Alkenyl.

Besonders bevorzugte Kationen CAT⁺ aus der Gruppe der Iso-Chinolinfarbstoffe sind: 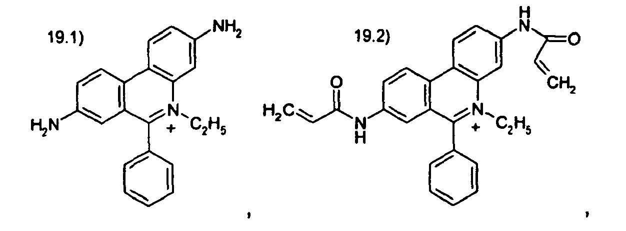 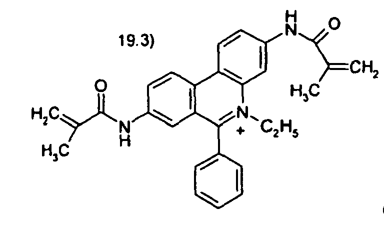 oder

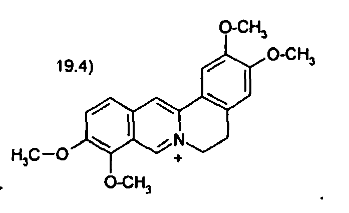

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines quarternierten Azafluorenonfarbstoffs ist.

Bevorzugte Kationen können durch die Formel XX 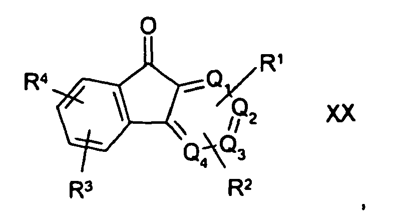 beschrieben werden, wobei
R¹, R², R³ und R⁴ jeweils unabhängig voneinander Wasserstoff, F, Cl, Br, Alkyl, OAlkyl, Hydroxyalkoxy mit 1-4 C-Atomen, OH, NO₂, NH₂, NHAlkyl, NAlkyl₂ oder COAlkyl bedeuten, wobei auch zwei Reste gemeinsam einen ankondensierten aromatischen Ring bilden können und
Q₁, Q₂, Q₃ und Q₄ in der Summe drei Kohlenstoffatome und ein quartäres Stickstoffatom, das den Rest R⁵ mit der Bedeutung von Alkyl, Hydroxyalkyl mit 1-4 C-Atomen, COOAlkyl, SAlkyl, Aryl, Aryl-Alkyl oder Heteroaryl trägt, welches auch ein N-Oxid ausbilden kann.
Bevorzugt sind R¹-R⁴ Wasserstoff. R⁵ ist bevorzugt Alkyl, Arylalkyl oder Alkyl-Aryl.

Besonders bevorzugte Kationen CAT⁺ aus der Gruppe der quarternären Azafluorenonfarbstoffe sind: 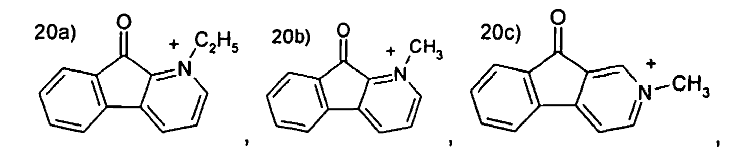 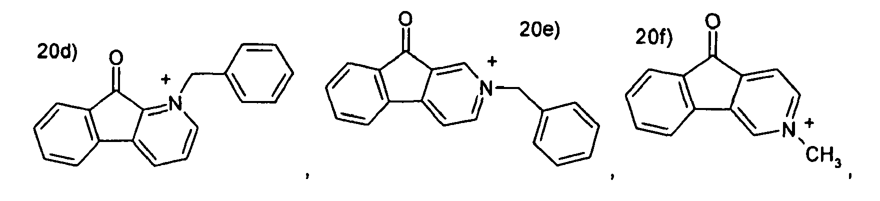 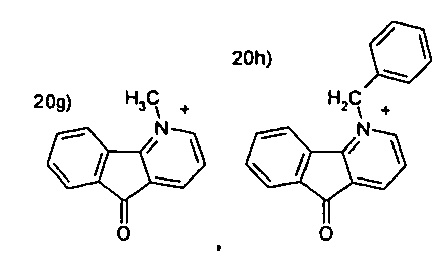 oder

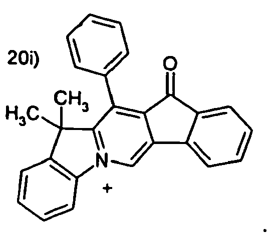

Erfindungsgemäß ist eine Gruppe von Verbindungen der Formel I bevorzugt, wobei CAT⁺ jeweils eine der bei Formel I oder den Formeln III bis XX angegebenen oder bevorzugt beschriebenen Bedeutungen hat und worin Y⁻ ein Cyanoborat der Formel II-1 ist, wie zuvor beschrieben.

Überraschend wurde gefunden, dass die erfindungsgemäßen kationischen Farbstoffe besonders stabil sind. Ihre elektrochemische, thermische und Hydrolysestabilität ist deutlich höher, als die herkömmlicher kationischer Farbstoffe mit Cl⁻-, Tosylat- oder Hexafluorophosphat-Anionen.

Weiterhin zeigen die erfindungsgemäßen Farbstoffe eine verbesserte Löslichkeit in organischen Lösungsmitteln. Herkömmliche Farbstoffe wie Rhodamin B, Janusgrün oder Nilblau sind beispielsweise in Benzol unlöslich. Die erfindungsgemäßen kationischen Farbstoffe mit CAB-Anion wie Rhodamin-CAB, Janusgrün-CAB oder Nilblau-CAB sind dagegen in Benzol löslich.

Herkömmliches Nilblau mit Hydrogensulfat als Anion ist in Dimethylcarbonat unlöslich, das erfindungsgemäße Nilblau-CAB ist dagegen gut oder sehr gut löslich.

Die erfindungsgemäßen kationischen Farbstoffe sind daher in Systemen auf Lösungsmittelbasis anwendbar.

Aufgrund der verbesserten Stabilität der erfindungsgemäßen kationischen Farbstoffe eignen sich diese für eine Vielzahl von Anwendungen. Gegenstand der Erfindung ist damit auch die Verwendung der erfindungsgemäßen kationischen Farbstoffe , gegebenenfalls zusammen mit Hilfsstoffen, zum Färben von Kunststoffen, Kunststofffasern, Holz, Metallen, Textilien, Pelzen, keramischen Materialien, Gläsern, Folien, im Agrarbereich z.B. bei der Saatguteinfärbung, zur Herstellung von Flexodruckfarben, als Kugelschreiberpasten, als Stempelfarbe und zum Färben von Leder und Papier, in kosmetischen Formulierungen, in der Farbindustrie, in der Biochemie, der Biologie, der Medizin, der Analytik und der Elektronik, in der Mikroskopie und Histochemie z.B. zum Anfärben von Geweben und Bakterien, als Warnfarbe bei giftigen Stoffen z.B. in Treibstoffen oder Reinigungsmitteln, als Sensibilisatoren in der optischen und Elektrophotographie, in Tierpflegeprodukten, in Chromatographiematerialien, in Lacken und Beschichtungen, Farben, Druckfarben, im Sicherheitsdruck, kosmetischen Formulierungen, Kontaktlinsen, in Pharmazeutika sowie für die Herstellung von Farbpräparationen wie beispielsweise Pearlets, Pasten und Anteigungen sowie von Trockenpräparaten, wie z.B. Pellets, Granulaten, Chips usw., die vorzugsweise in Druckfarben und Lacken verwendet werden. Bei Einsatz der kationischen Farbstoffe in Lacken und Farben sind alle dem Fachmann bekannten Anwendungsbereiche möglich, wie z.B. Pulverlacke, Automobillacke, Druckfarben für den Tief-, Offset-, Sieb- oder Flexodruck sowie für Lacke in Innen- und Außenanwendungen. Spezielle Anwendungsfelder sind zudem in Datenerfassungssystemen, die Reprographie, in Mikrofarbfiltern, in der Photogalvanik, der Lasertechnik und der Photoindustrie (High technology applicatioin of organic colorants, P. Gregory, Plenum Press, N.Y. 1991). Für die erfindungsgemäßen kationischen Farbstoffe gibt es außerdem Anwendungsfelder wie CD-Recorder (CD-R), DVD-Recorder (DVD+R, DVD+RW), Bluray-Disc (BD-ROM, BD-R, BD-RE), Computer to Plate (CTP), Laser Filter, Laser Marking und Photopolymerisation.

Darüber hinaus können die erfindungsgemäßen kationischen Farbstoffe auch in vorteilhafter Weise mit allen bekannten Pigmenten und anorganischen Farbmitteln gemischt werden.

Die erfindungsgemäßen kationischen Farbstoffe können mit geeigneten, dem Fachmann bekannten Zusatzstoffen der jeweiligen Anwendung zugeführt werden. Zum Färben von Geweben, Gewirken und Gestricken werden Farbstoffe in Suspensionen mit Zusätzen wie Färbereihilfsmitteln (Farbstofflösungs-, -dispergier-, -fixier- und -reduktionsmittel, Netzmittel, Färbebeschleuniger usw.), Salzen, Alkalien oder Säuren verwendet.

Gegenstand der vorliegenden Erfindung ist zudem ein Verfahren zur Herstellung der erfindungsgemäßen kationischen Farbstoffe. Hierbei werden Verbindungen der allgemeinen Formel XXI

CAT⁺A⁻ (XXI)

wobei CAT⁺ die bei Formel I angegebene Bedeutung hat oder einer der Formeln III bis XX entspricht
und A⁻ Cl⁻, Br⁻,I⁻, BF₄⁻, PF₆⁻, ClO₄⁻, Sulfat, Tosylat, Hydrosulfat, Triflat, Trifluoracetat, Acetat oder Oxalat bedeutet,
mit einer Verbindung der allgemeinen Formel XXII

E⁺Y⁻ (XXII)

umgesetzt, wobei Y⁻ die bei Formel I, II-1 angegebene oder eine bevorzugte Bedeutung hat und
E⁺ ein Kation der Alkali-, Erdalkalimetalle oder eines Metalls der Gruppe 11 und 12 ist.

Die Umsetzung, die auch als Umsalzung bezeichnet werden kann, erfolgt in organischen Lösungsmitteln, vorzugsweise in wässrigen Lösungen bei Temperaturen von 0° bis 100°C, vorzugsweise bei 10° bis 40°C, besonders bevorzugt bei Raumtemperatur. E⁺ kann aber auch die Bedeutung Ammonium, Alkylammonium mit C₁-C₄-Alkyl, Phosphonium, Alkylphosphonium mit C₁-C₄-Alkyl, Imidazolium, Guanidinium, Uronium, Thiouronium, Pyridinium, Pyrrolidinium oder andere heterocyclische Kationen haben, wobei dann die Umsetzung in Wasser oder in organischen Lösungsmitteln erfolgt, die mit Wasser mischbar sind, beispielsweise Dimethoxyethan, Acetonitril, Aceton, Tetrahydrofuran, Dimethylformamid, Dimethylsulfoxid, Dioxan, Propionitril, Benzonitril, Methanol, Ethanol oder Isopropanol.

E⁺ ist bevorzugt ein Kation der Alkali-, Erdalkalimetalle oder eines Metalls der Gruppe 11 und 12, Ammonium, Alkylammonium mit C₁-C₄-Alkyl, Phosphonium, Alkylphosphonium mit C₁-C₄-Alkyl oder Guanidinium. Unter Alkylammonium mit C₁-C₄-Alkyl ist sowohl ein mit Alkylgruppen mit 1-4 C-Atomen monosubstitiertes, als auch di-, tri- oder tetrasubstituiertes Ammonium zu verstehen. Unter Alkylphosphonium mit C₁-C₄-Alkyl ist sowohl ein mit Alkylgruppen mit 1-4 C-Atomen monosubstitiertes, als auch di-, tri- oder tetrasubstituiertes Phosphonium zu verstehen. E⁺ ist ganz besonders bevorzugt ein Alkalimetallkation, beispielsweise Li⁺ oder K⁺.

Gegenstand der Erfindung ist auch ein Verfahren zur Herstellung von Carbocyaninfarbstoffen der Formel XXIII 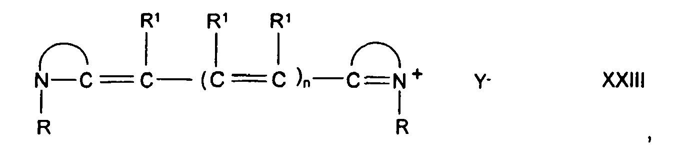 wobei,
n 0, 1, 2, 3, 4 oder 5,
R jeweils unabhängig voneinander Alkyl, Alkenyl, Cycloalkyl, Aryl oder Heteroaryl und
R¹ jeweils unabhängig voneinander H, Cl, Br, I, Alkyl, teilweise oder vollständig chloriertes Alkyl, Alkenyl, Cycloalkyl, Aryl, Heteroaryl, OAlkyl, OAryl, SAlkyl, SAryl, NHAlkyl, N(Alkyl)₂, C(O)H, C(O)Alkyl, C(O)Aryl, CN, N=N-Aryl, P(Aryl)₂, NHCOAlkyl oder NHCOAryl bedeutet und
das Ringsystem, dargestellt durch 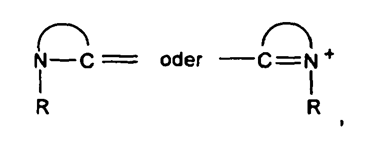 einen Stickstoff enthaltenden ungesättigten mono-, bi- oder tricyclischen Heterocyclus mit 5 bis 13 Ringgliedern bedeutet, wobei weiterhin 1, 2 oder 3 N- und/oder 1 oder 2 S- oder O-Atome vorliegen können und der heterocyclische Rest ein- oder mehrfach durch Z, wie zuvor beschrieben, substituiert sein kann und
wobei Y⁻ ein CAB⁻-Anion der allgemeinen Formel (II-1)

[B(CN)_{y1}F_{4-y1-x1}(R⁰)ₓ₁)⁻ (II-1)

ist und
y1 1, 2, 3 oder 4,
x1 0, 1, 2 oder 3 und
R⁰ Alkyl, Aryl, fluoriertes Alkyl, fluoriertes Aryl, Cycloalkyl oder Alkyl-Aryl bedeutet, mit der Bedingung, dass R⁰ Wasserstoff sein kann, wenn y1 >2 ist,
**dadurch gekennzeichnet, dass** eine Verbindung der Formel XXIV 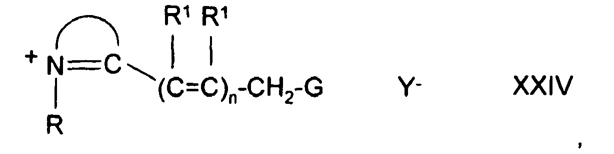 verwendet wird, wobei das Ringsystem und Y⁻ eine der bei Formel XXIII angegebenen Bedeutungen haben und
n 0, 1, 2, 3 oder 4,
R¹ Wasserstoff, Alkyl, Alkenyl, Aryl, Heteroaryl, SAryl, SAlkyl, OAlkyl, CON(Alkyl)₂, OAryl, N(Alkyl)₂, NH(Aryl), N(Alkyl)(Aryl), OC(O)Aryl, OH, CN, Cl, F, Alkyl-Aryl, C(O)Alkyl, CONH₂ oder COOAlkyl,
G Wasserstoff, Alkyl, Alkenyl, Aryl, Heteroaryl, N=C(R)₂, CONHAryl, C(O)Aryl oder CONHAlkyl und
R Alkyl, Alkenyl, Cycloalkyl, Aryl oder Heteroaryl bedeutet.

Die Synthese der Carbocyaninfarbstoffe der Formel XXIII mit Edukten der Formel XXIV, wie zuvor beschrieben, kann nach Methoden durchgeführt werden, die dem Fachmann bekannt sind, insbesondere nach den Vorschriften aus
T.V.S. Rao, J. B. Huff, C. Bieniarz, Tetrahedron 54 (1998), 10627-10634, L.G.S. Brooker, F.L. White, G.H. Keyes, C.P. Smyth and P.F. Oesper, J. Am. Chem. Soc, 63, (1941), 3192-3203 oder
F.M. Hamer and R.J. Rathbone, J. Chem. Soc, (1945), 595-600.

Gegenstand der Erfindung sind auch Verbindungen der Formel XXIV. Insbesondere Verbindungen der Formel XXIV, bei denen G Wasserstoff bedeutet.

Bevorzugte Verbindungen der Formel XXIV sind die folgenden Verbindungen, wobei Y⁻ eine bei Formel I oder der Formel II-1 oder eine bevorzugte Bedeutung hat: 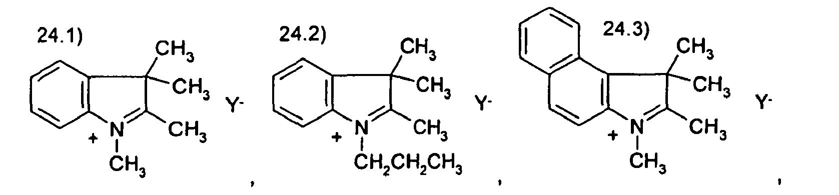 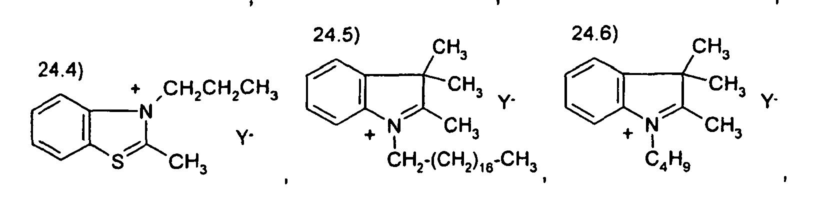 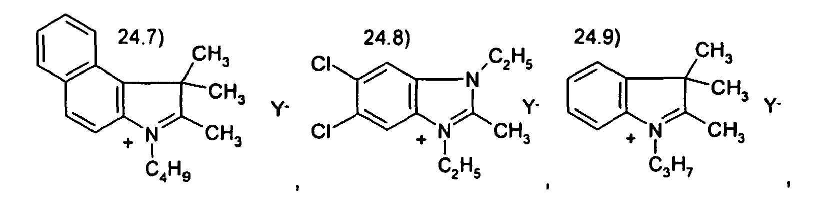 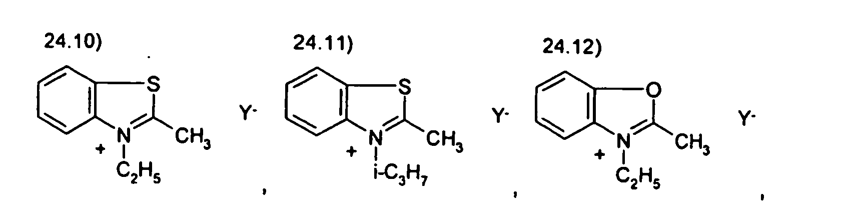 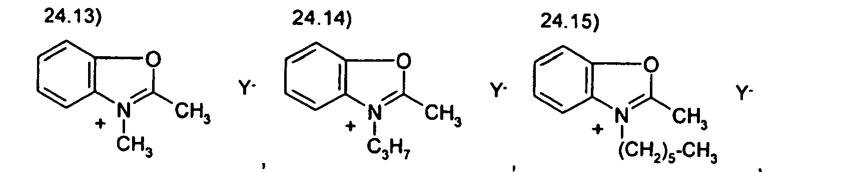 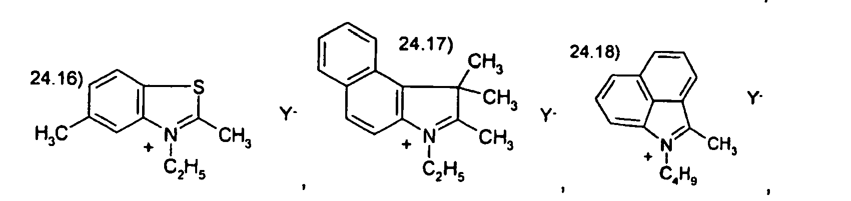 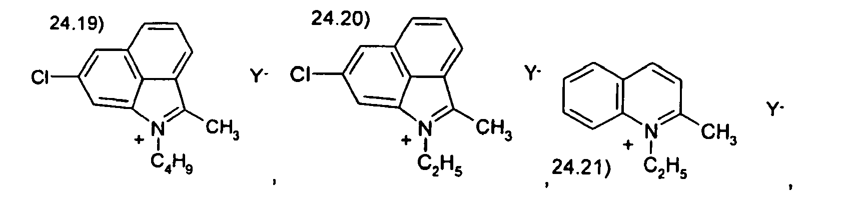 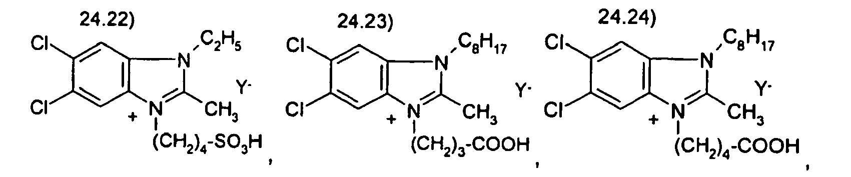 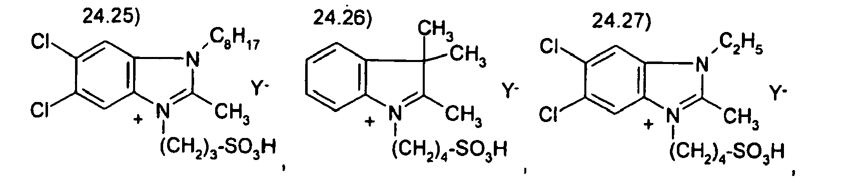 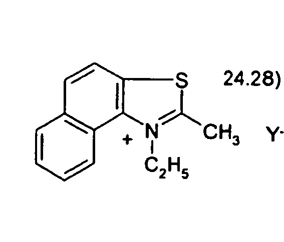 oder

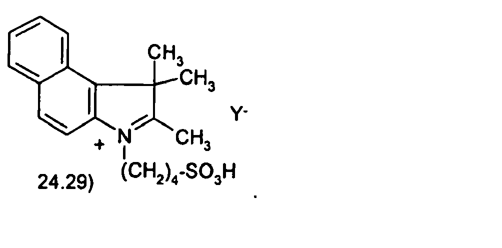

Gegenstand der Erfindung ist weiterhin ein Verfahren zur Herstellung der Verbindungen der Formel XXIV, wie zuvor definiert, **dadurch gekennzeichnet, dass**
eine Verbindung der Formel XXV 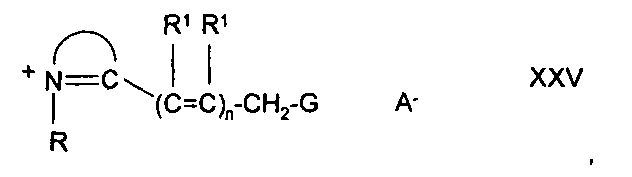 worin
A⁻ Cl⁻, Br⁻, I⁻, BF₄⁻, PF6⁻, ClO₄⁻, Sulfat, Tosylat, Hydrosulfat, Triflat, Trifluoracetat, Acetat oder Oxalat bedeutet,
das Ringsystem, dargestellt durch 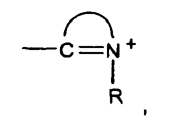 einen Stickstoff enthaltenden ungesättigten mono-, bi- oder tricyclischen Heterocyclus mit 5 bis 13 Ringgliedern bedeutet, wobei weiterhin 1, 2 oder 3 N- und/oder 1 oder 2 S- oder O-Atome vorliegen können und der heterocyclische Rest ein- oder mehrfach durch Z, wie zuvor beschrieben, substituiert sein kann,
n 0, 1, 2, 3 oder 4,
R¹ Wasserstoff, Alkyl, Alkenyl, Aryl, Heteroaryl, SAryl, SAlkyl, OAlkyl, CON(Alkyl)₂, OAryl, N(Alkyl)₂, NH(Aryl), N(Alkyl)(Aryl), OC(O)Aryl, OH, CN, Cl, F, Alkyl-Aryl, C(O)Alkyl, CONH₂ oder COOAlkyl,
R Alkyl, Alkenyl, Cycloalkyl, Aryl oder Heteroaryl und
G Wasserstoff, Alkyl, Alkenyl, Aryl, Heteroaryl, N=C(R)₂, CONHAryl, C(O)Aryl oder CONHAlkyl bedeutet,
mit einer Verbindung der Formel XXVI

E⁺ Y⁻ XXVI,

umgesetzt wird, worin
Y⁻ die bei Formel I oder der Formel II-1 angegebene oder eine bevorzugte Bedeutung hat und
E⁺ ein Kation der Alkali-, Erdalkalimetalle oder eines Metalls der Gruppe 11 oder 12 ist.

Die Umsetzung, die auch als Umsalzung bezeichnet werden kann, erfolgt vorzugsweise in wässrigen Lösungen bei Temperaturen von 0° bis 100°C, vorzugsweise bei 10° bis 40°C, besonders bevorzugt bei Raumtemperatur. E⁺ kann aber auch die Bedeutung Ammonium, Alkylammonium mit C₁-C₄-Alkyl, Phosphonium, Alkylphosphonium mit C₁-C₄-Alkyl, Imidazolium, Guanidinium, Uronium, Thiouronium, Pyridinium, Pyrrolidinium oder andere heterocyclische Kationen haben, wobei dann die Umsetzung vorzugsweise in organischen Lösungsmitteln erfolgt, beispielsweise in Alkoholen.
E⁺ ist bevorzugt ein Kation der Alkali-, Erdalkalimetalle oder eines Metalls der Gruppe 11 und 12, Ammonium, Alkylammonium mit C₁-C₄-Alkyl, Phosphonium, Alkylphosphonium mit C₁-C₄-Alkyl oder Guanidinium. E⁺ ist ganz besonders bevorzugt ein Alkalimetallkation, beispielsweise Li⁺ oder
K⁺.

Gegenstand der Erfindung ist auch ein Verfahren zur Herstellung von Azofarbstoffen mit der Formel XXVIII 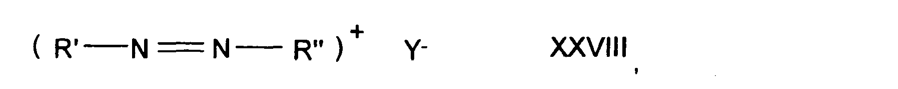 wobei
R' und R" Aryl oder Heteroaryl bedeuten und einer der beiden aromatischen Kerne positiv geladen ist und Y⁻ eine der bei Formel I oder der Formel II-1 angegebenen Bedeutungen hat,
**dadurch gekennzeichnet, dass** eine Verbindung der Formel XXIX

R'-N₂⁺ Y⁻ XXIX

wobei R' und Y⁻ eine der bei Formel XXVIII angegebene Bedeutung hat, mit der aromatischen cyclischen oder heterocyclischen Verbindung R" umgesetzt wird.

Die Umsetzung erfolgt bei Reaktionsbedingungen, die typisch sind für Azokupplungen und die dem Fachmann hinlänglich bekannt sind, beispielsweise aus Beyer Walter, Lehrbuch der Organischen Chemie, 21. Auflage, S. Hirzel Verlag Stuttgart 1988.

Gegenstand der Erfindung sind auch Verbindungen der Formel XXIX. Bevorzugte Verbindungen der Formel XXIX sind die folgenden Verbindungen, wobei Y⁻ eine bei Formel I, der Formel II-1 angegebene oder eine bevorzugte Bedeutung hat: 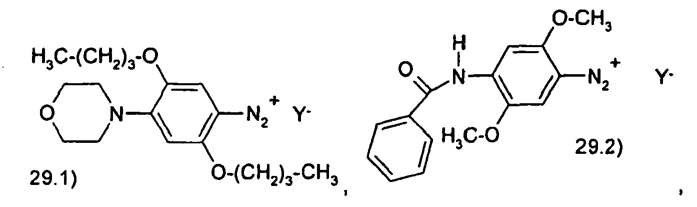 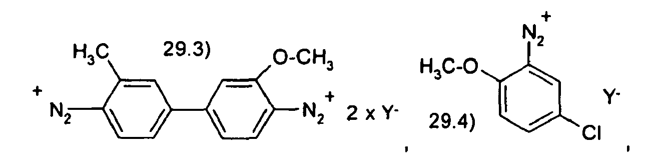 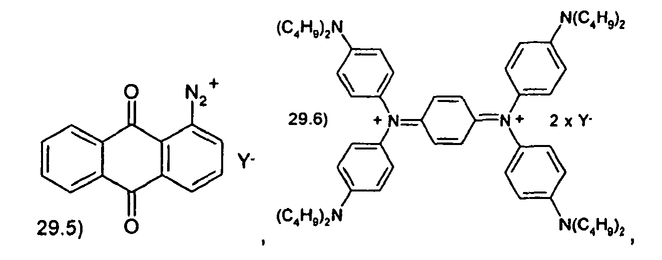 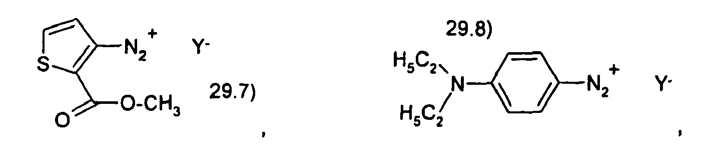 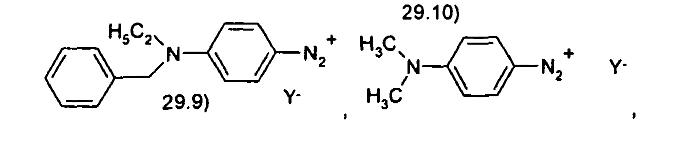 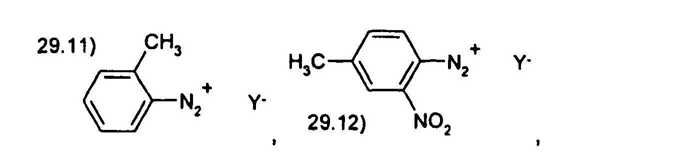 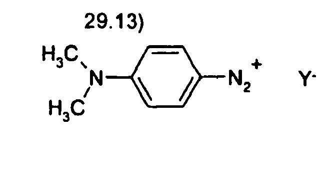 oder

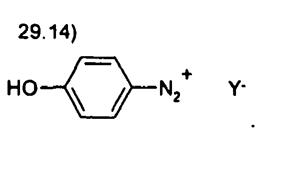

Die Synthese der Verbindungen der Formel XXIX erfolgt analog zu bekannten Methoden der Diazotierung mit nachfolgender Umsalzung, wie zuvor beschrieben.

Die nachfolgenden Beispiele sollen die Erfindung näher erläutern, ohne sie jedoch zu beschränken.

### Beispiel 1:

### Herstellung eines Azofarbstoffes als Tetracyanoborat aus Janusgrün

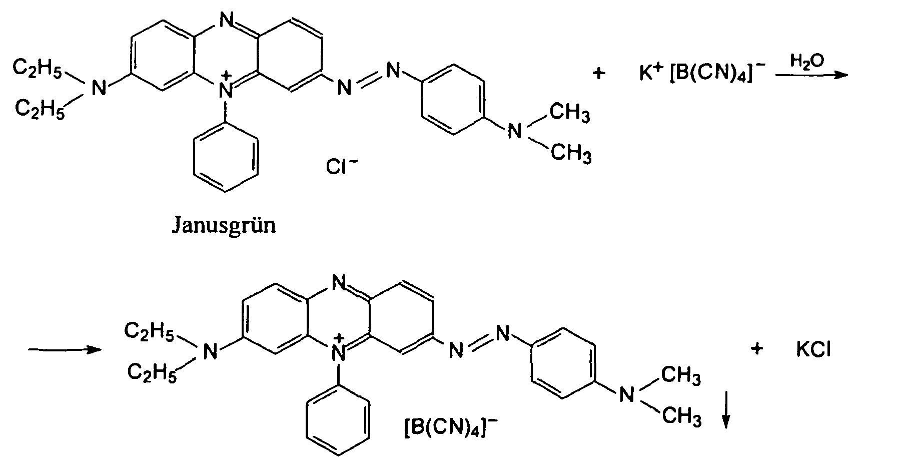

0,49 g (0,959 mmol) des Farbstoffes Janusgrün werden in 100 cm³ Wasser gelöst. Bei Raumtemperatur werden zu dieser Lösung 0,15 g (0,975 mmol) Kalium tetracyanoborat, K[B(CN)₄], in 5 cm³ Wasser unter Rühren zugetropft. Das Reaktionsgemisch wird noch 5 min weitergerührt. Der
Niederschlag wird abfiltriert und 3 x mit 50 cm³ Wasser gewaschen. Der Rückstand wird im Vakuum bei 1,3 Pa und 80°C getrocknet.
Man erhält 0,41 g Janusgrün als Tetracyanoborat, das entspricht einer Ausbeute von 72,4 %.
¹¹B NMR (Referenz: BF_{3·}OEt₂ extern; CD₃CN) : -38.58 s.
¹H NMR (Referenz: TMS ; CD₃CN) : 0.99 m (CH₃), 1.24 m (CH₃), 3.03 m (2CH₃), 3.29 m (CH₂), 3.65 m (CH₂), 5.63 s (1 H), 6.56 s (1 H), 6.58 s (1 H), 7.01 s (1H), 7.44-7.54 m (4H), 7.58 d (1H), 7.80-7.95 m (5H), 8.08 d (1H) ; J_{H,H} = 9.0 Hz.

### Beispiel 2:

### Herstellung eines Azinfarbstoffs als Tetracyanoborat aus Safranin O

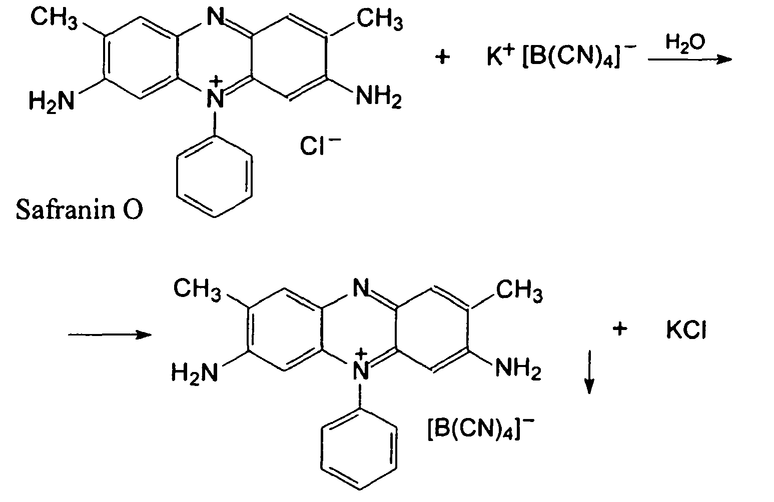

0,57 g (1,62 mmol) des Farbstoffes Safranin O werden in 100 cm³ Wasser gelöst. Bei Raumtemperatur werden zu dieser Lösung 0,26 g (1,69 mmol) Kalium tetracyanoborat, K[B(CN)₄], in 5 cm³ Wasser unter Rühren zugetropft. Das Reaktionsgemisch wird noch 5 min weitergerührt. Der Niederschlag wird abfiltriert und 3 x mit 50 cm³ Wasser gewaschen. Der Rückstand wird im Vakuum bei 1,3 Pa und 80°C getrocknet. Man erhält 0,64 g Safranin O als Tetracyanoborat, das entspricht einer Ausbeute von 91,8 %.
¹¹B NMR (Referenz: BF₃·OEt₂ extern; CD₃CN) : -38.57 s.
¹H NMR (Referenz: TMS ;CD₃CN) : 2.27 d (2CH₃), 5.99 br.s (2NH₂), 7.45-7.52 m (2H), 7.71 s (2H), 7.74-7.89 m (5H), ⁴J_{H,H} = 1.0 Hz.

### Beispiel 3:

### Herstellung eines Xanthen-Farbstoffs als Tetracyanoborat aus Rhodamin B

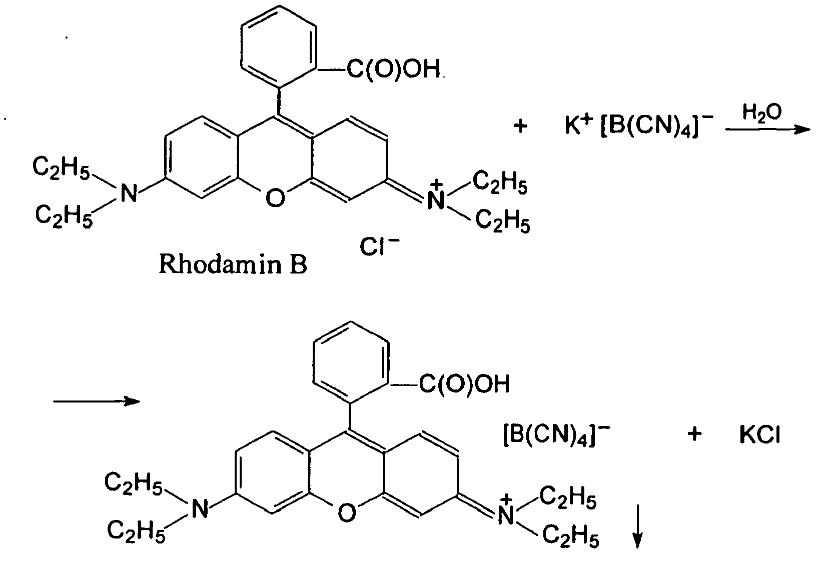

0,68 g (1,42 mmol) des Farbstoffes Rhodamin B werden in 100 cm³ Wasser gelöst. Bei Raumtemperatur werden zu dieser Lösung 0,23 g (1,50 mmol) Kalium tetracyanoborat, K[B(CN)₄], in 5 cm³ Wasser unter Rühren zugetropft. Das Reaktionsgemisch wird noch 5 min weitergerührt. Der Niederschlag wird abfiltriert und 3 x mit 50 cm³ Wasser gewaschen. Der Rückstand wird im Vakuum bei 1,3 Pa und 80°C getrocknet.
Man erhält 0,755 g Rhodamin B als Tetracyanoborat, das entpricht einer Ausbeute von 95,2 %.
¹¹B NMR (Referenz: BF₃·OEt₂ extern; CD₃CN) : -38.60 s.
¹H NMR (Referenz: TMS ; CD₃CN) : 1.25 t (4CH₃), 3.60 q (4CH₂), 6.82 s (1H), 6.83 s (1H), 6.90 d, 6.92 d (2H; A,B), 7.05 s, 7.07 s (2H; A,B), 7.36 d,d (1H), 7.74-7.85 m (2H), 8.27 d,d (1H); ³J_{H,H} = 7.1 Hz , J_{H,H} = 2.4 Hz , J_{A,B} = 9.5 Hz, J_{H,H} = 7.6 Hz, J_{H,H} = 1.0 Hz.

### Beispiel 4:

### Herstellung eines Oxazin-Farbstoffs als Tetracyanoborat aus Nilblau

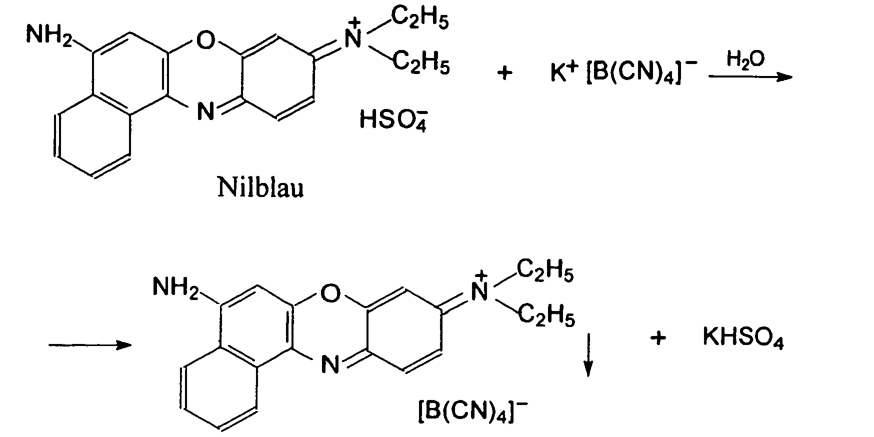

0,62 g (1,49 mmol) des Farbstoffes Nilblau Hydrogensulfat werden in 100 cm³ Wasser gelöst. Bei Raumtemperatur werden zu dieser Lösung 0,24 g (1,56 mmol) Kalium tetracyanoborat, K[B(CN)₄], in 5 cm³ Wasser unter Rühren zugetropft. Das Reaktionsgemisch wird noch 5 min weitergerührt. Der Niederschlag wird abfiltriert und 3 x mit 50 cm³ Wasser gewaschen. Der Rückstand wird im Vakuum von 1,3 Pa bei 80°C getrocknet.
Man erhält 0,59 g Nilblau als Tetracyanoborat, das entspricht einer Ausbeute von 88,2 %.
¹¹B NMR (Referenz: BF₃·OEt₂ extern; CD₃CN) : -38.54 s.
¹H NMR (Referenz: TMS ; CD₃CN) : 1.28 t (2CH₃), 3.56 q (2CH₂), 6.32 s (1 H), 6.45 d (1 H), 6.98 d,d (1 H), 7.41 s (NH₂), 7,38 d (1 H), 7.55-7.78 m (3H), 8.35 d (1H); ³J_{H,H} = 7.1 Hz , J_{H,H} = 3.1 Hz , J_{H,H} = 2.7 Hz , J_{H,H} = 9.5 Hz, J_{H,H} = 8.0 Hz.

### Beispiel 5:

### Herstellung von 3-Ethyl-2-methyl-benzthiazolium Tetracyanoborat

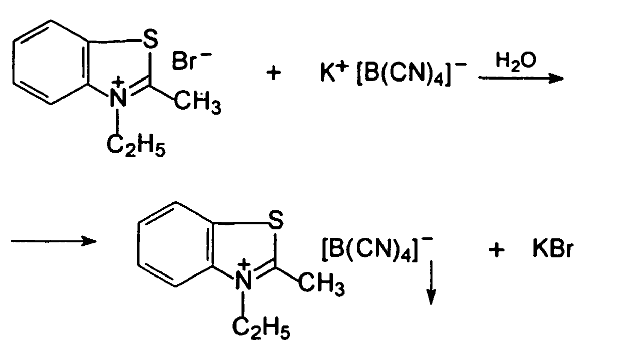

Zu einer Lösung von 2,76 g (10,69 mmol) 3-Ethyl-2-methyl-benzthiazoliumbromid in 50 ml Wasser werden 1,64 g (10,66 mmol) Kalium tetracyanoborat, K[B(CN)₄], in 5 ml Wasser unter Rühren zugetropft. Die untere flüssige Phase wird mehrmals mit 50 ml Dichlormethan extrahiert und die vereinigten organischen Phasen mit Mg₂SO₄ getrocknet. Anschließend wird das Lösungsmittel abdestilliert und der Rückstand im Vakuum bei 1,3 Pa bei 60°C getrocknet.
Man erhält 2,78 g 3-Ethyl-2-methyl-benzthiazolium Tetracyanoborat, das entspricht einer Ausbeute von 89,1 %.
¹H NMR (Referenz: TMS ; CD₃CN) : 1.53 t (CH₃), 3.09 s (CH₃), 4.67 q (CH₂), 7.79 t (1H), 7.89 t (1H), 8.10 d (1H), 8.21 d (1H); ³J_{H,H} = 8.4 Hz, ³J_{H,H} = 7.4 Hz.

### Beispiel 6:

### Herstellung von 3-Ethyl-2-[3-(3-ethyl-3H-benzothiazol-2-yliden)-propenyl]-benzothiazolium Tetracyanoborat

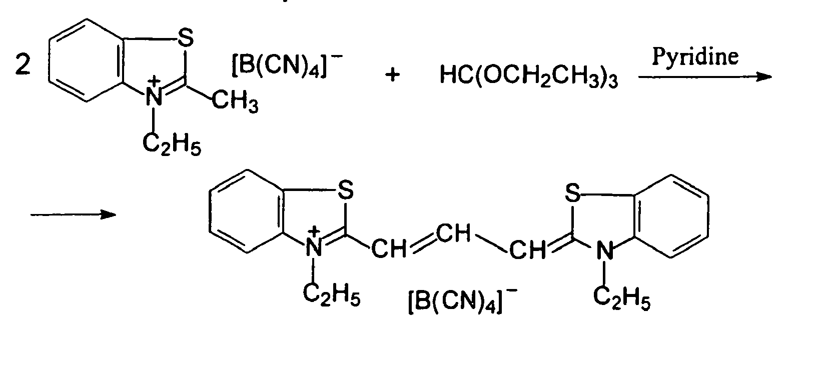

Zu einer Lösung von 0,710 g (4,79 mmol) Triethylorthoformiat in 15 ml trockenem Pyridin werden 2,73 g (9,32 mmol) 3-Ethyl-2-methyl-benzthiazolium Tetracyanoborat zugegeben. Die Reaktionsmischung wird 15 Stunden bei einer Ölbad-Temperatur von 110-115°C unter Schutzgasatmosphäre erhitzt. Nach Abdestillieren des Lösungsmittels im Vakuum bei 1,3 Pa und 80°C wird der Feststoff mehrmals mit kaltem Ethanol gewaschen und im Vakuum bei 1,3 Pa und 60°C getrocknet.
Man erhält 1,76 g 3-Ethyl-2-[3-(3-ethyl-3H-benzothiazol-2-yliden)-propenyl]-benzothiazolium Tetracyanoborat, das entpricht einer Ausbeute von 78,6 %.
¹H NMR (Referenz: TMS ; CD₃CN) : 1.38 t (2CH₃), 4.21 q (2CH₂), 6.30 d (2H), 7.32 m (2H), 7.48 m (4H), 7.75 d (2H), 7.78 t (1H); ³J_{H,H} = 12.7 Hz, ³J_{H,H} = 7.2 Hz, J_{H,H} = 7.7 Hz.

Beispiel 7:

Löslichkeitsuntersuchungen von Nilblau als Tetracyanoborat

Der in Beispiel 4 hergestellte Farbstoff aus Nilblau wird verschiedenen Lösungsmitteln ausgesetzt.

Als Referenz wird der herkömmliche Farbstoff Nilblau mit Hydrogensulfat als Anion unter gleichen Bedingungen untersucht.

**Tabelle 1: Löslichkeit von Nilblau mit HSO₄⁻ oder [B(CN)₄]⁻**

| Lösungsmittel | Hydrosulfatanion | [B(CN)₄]⁻ |
|---|---|---|
| Wasser | +++ | - |
| Methanol | +++ | +++ |
| Benzol | - | + |
| Hexan | - | - |
| Diethylether | ++ | ++ |
| Tetrahydrofuran | + | +++ |
| Dimethylcarbonat | - | ++ |
| Ethylacetat | + | +++ |

| | | |
|---|---|---|
| Erklärung: - unlöslich, + löslich, ++ gut löslich, +++ sehr gut löslich | | |

### Beispiel 8:

Löslichkeitsuntersuchungen von Rhodamin B als Tetracyanoborat

Der in Beispiel 3 hergestellte Farbstoff aus Rhodamin B wird verschiedenen Lösungsmitteln ausgesetzt.

Als Referenz wird der herkömmliche Farbstoff Rhodamin B mit Chlorid als Anion unter gleichen Bedingungen untersucht.

**Tabelle 2: Löslichkeit von Rhodamin B mit Cl⁻ oder [B(CN)₄]⁻**

| Lösungsmittel | Cl⁻ | [B(CN)₄]⁻ |
|---|---|---|
| Wasser | +++ | - |
| Methanol | +++ | +++ |
| Benzol | -+ | ++ |
| Hexan | - | ₋ |
| Diethylether | -+ | ++ |
| Tetrahydrofuran | ++ | +++ |
| Dimethylcarbonat | ++ | +++ |
| Ethylacetat | + | +++ |

| | | |
|---|---|---|
| Erklärung: - unlöslich, + löslich, ++ gut löslich, +++ sehr gut löslich | | |

Beispiel 9:

Löslichkeitsuntersuchungen von Safranin O als Tetracyanoborat

Der in Beispiel 2 hergestellte Farbstoff aus Safranin O wird verschiedenen Lösungsmitteln ausgesetzt.

Als Referenz wird der herkömmliche Farbstoff Safranin O mit Chlorid als Anion unter gleichen Bedingungen untersucht.

**Tabelle 3: Löslichkeit von Safranin O mit Cl⁻ oder [B(CN)₄]⁻**

| Lösungsmittel | Cl⁻ | [B(CN)₄]⁻ |
|---|---|---|
| Wasser | +++ | - |
| Methanol | +++ | +++ |
| Benzol | - | - |
| Hexan | - | - |
| Diethylether | - | + |
| Tetrahydrofuran | + | +++ |
| Dimethylcarbonat | -+ | ++ |
| Ethylacetat | - | ++ |

| | | |
|---|---|---|
| Erklärung: - unlöslich, + löslich, ++ gut löslich, +++ sehr gut löslich | | |

### Beispiel 10:

Löslichkeitsuntersuchungen von Janusgrün als Tetracyanoborat

Der in Beispiel 1 hergestellte Farbstoff aus Janusgrün wird verschiedenen Lösungsmitteln ausgesetzt.

Als Referenz wird der herkömmliche Farbstoff Janusgrün mit Chlorid als Anion unter gleichen Bedingungen untersucht.

**Tabelle 4: Löslichkeit von Janusgrün mit Cl⁻ oder [B(CN)₄]⁻**

| Lösungsmittel | Cl⁻ | [B(CN)₄]⁻ |
|---|---|---|
| Wasser | +++ | - |
| Methanol | +++ | +++ |
| Benzol | - | + |
| Hexan | - | - |
| Diethylether | - | + |
| Tetrahydrofuran | ++ | +++ |
| Dimethylcarbonat | +- | ++ |
| Ethylacetat | + | +++ |

| | | |
|---|---|---|
| Erklärung: - unlöslich, + löslich, ++ gut löslich, +++ sehr gut löslich | | |

## Patentansprüche

1. Kationische Farbstoffe der allgemeinen Formel I
CAT Y- (I),
wobei Y⁻ ein CAB⁻-Anion der allgemeinen Formel (II-1)
[B(CN)_{y1}F_{4-y1-x1}(R⁰)ₓ₁]⁻ (II-1)
ist und
y1 1, 2, 3 oder 4,
x1 0, 1, 2 oder 3 und
R⁰ Alkyl, Aryl, fluoriertes Alkyl, fluoriertes Aryl, Cycloalkyl oder Alkyl-Aryl bedeutet, mit der Bedingung, dass R⁰ Wasserstoff sein kann, wenn y1 >2 ist,
und
CAT⁺ ein Kation ist, ausgewählt aus der Gruppe der Azin-, Xanthen-, Polymethin-, Styryl-, Azo-, Tetrazolium-, Pyrylium-, Benzopyrylium-, Thiopyrylium-, Benzothiopyrylium-, Thiazin-, Oxazin-, Triarylmethan-, Diarylmethan-, Acridin-, Chinolin-, Iso-Chinolin- oder quarternierten Azafluorenon-Farbstoffe.

2. Farbstoffe gemäß Anspruch 1, **dadurch gekennzeichnet, dass** CAT⁺ ein Kation eines Polymethinfarbstoffs ist.

3. Farbstoffe gemäß Anspruch 2, **dadurch gekennzeichnet, dass** CAT⁺ ein Kation eines Cyaninfarbstoffs, Carbocyaninfarbstoffs, Azacarbocyaninfarbstoffs, Diazacarbocyaninfarbstoffs, Triazacarbocyaninfarbstoffs, Hemicyaninfarbstoffs oder Diazahemicyaninfarbstoffs ist.

4. Verfahren zur Herstellung kationischer Farbstoffe nach einem der Ansprüche 1 bis 3, **dadurch gekennzeichnet, dass**
eine Verbindung der allgemeinen Formel XXI
CAT⁺A⁻ (XXI),
wobei CAT⁺ ein Kation ist, ausgewählt aus der Gruppe der Azin-, Xanthen-, Polymethin-, Styryl-, Azo-, Tetrazolium-, Pyrylium-, Benzopyrylium-, Thiopyrylium-, Benzothiopyrylium-, Thiazin-, Oxazin-, Triarylmethan-, Diarylmethan-, Acridin-, Chinolin-, Iso-Chinolin- oder quarternierten Azafluorenon-Farbstoffe
und A⁻ Cl⁻, Br⁻, I⁻, BF₄⁻, PF₆⁻, Cl0₄⁻, Sulfat, Tosylat, Hydrosulfat, Triflat, Trifluoracetat, Acetat oder Oxalat bedeutet,
mit einer Verbindung der allgemeinen Formel XXII
E⁺ Y⁻ (XXII)
umgesetzt wird,
wobei Y⁻ ein CAB⁻-Anion der allgemeinen Formel (II-1)
[B(CN)_{y1}F_{4-y1-x1}(R⁰)ₓ₁]⁻ (II-1)
ist und
y1 1, 2, 3 oder 4,
x1 0, 1, 2 oder 3 und
R⁰ Alkyl, Aryl, fluoriertes Alkyl, fluoriertes Aryl, Cycloalkyl oder Alkyl-Aryl bedeutet, mit der Bedingung, dass R⁰ Wasserstoff sein kann, wenn y1 >2 ist,
und
E⁺ ein Kation der Alkali-, Erdalkalimetalle oder eines Metalls der Gruppe 11 und 12, Ammonium, Alkylammonium mit C₁-C₄-Alkyl, Phosphonium, Alkylphosphonium mit C₁-C₄-Alkyl oder Guanidinium ist.

5. Verfahren zur Herstellung von kationischen Farbstoffen gemäß Anspruch 4, **dadurch gekennzeichnet, dass** CAT⁺ ein Kation eines Carbocyaninfarbstoffs ist, wobei der Carbocyaninfarbstoff der Formel XXIII entspricht, 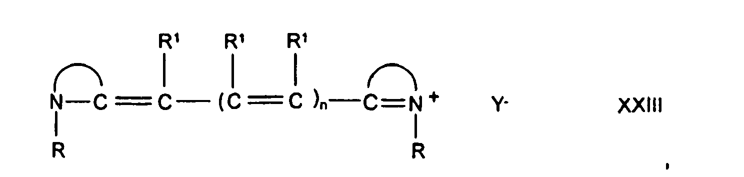 worin
n 0, 1, 2, 3, 4 oder 5,
R jeweils unabhängig voneinander Alkyl, Alkenyl, Cycloalkyl, Aryl oder Heteroaryl und
R¹ jeweils unabhängig voneinander H, Cl, Br, I, Alkyl, teilweise oder vollständig chloriertes Alkyl, Alkenyl, Cycloalkyl, Aryl, Heteroaryl, OAlkyl, OAryl, SAlkyl, SAryl, NHAlkyl, N(Alkyl)₂, C(O)H, C(O)Alkyl, C(O)Aryl, CN, N=N-Aryl, P(Aryl)₂, NHC(O)Alkyl oder NHC(O)Aryl bedeutet und
das Ringsystem, dargestellt durch 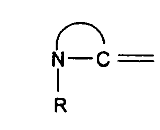 oder 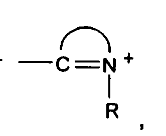 einen Stickstoff enthaltenden ungesättigten mono-, bi- oder tricyclischen Heterocyclus mit 5 bis 13 Ringgliedern bedeutet, wobei weiterhin 1, 2 oder 3 N- und/oder 1 oder 2 S- oder O-Atome vorliegen können und der heterocyclische Rest ein- oder mehrfach durch Z substituiert sein kann,
Z Wasserstoff, Alkyl, NO₂, F, Cl, Br, I, OH, COOH, OAlkyl, SCN, SCF₃, COOAlkyl, CH₂-COOAlkyl, NH₂, NHAlkyl oder N(Alkyl)₂ bedeutet
und
wobei Y⁻ ein CAB⁻-Anion der allgemeinen Formel (II-1)
[B(CN)_{y1}F_{4-y1-x1}(R⁰)ₓ₁]⁻ (II-1)
ist und
y1 1, 2, 3 oder 4,
x 1 0, 1, 2 oder 3 und
R⁰ Alkyl, Aryl, fluoriertes Alkyl, fluoriertes Aryl, Cycloalkyl oder Alkyl-Aryl bedeutet, mit der Bedingung, dass R⁰ Wasserstoff sein kann, wenn y1 >2 ist,
**dadurch gekennzeichnet, dass** eine Verbindung der Formel XXIV 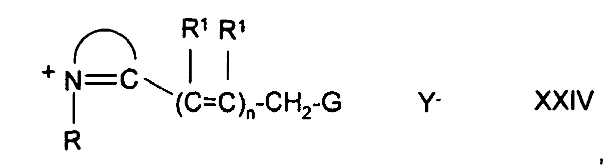 verwendet wird, wobei das Ringsystem, R, R¹ und Y⁻ eine der bei Formel XXIII angegebenen Bedeutungen haben und
n 0, 1, 2, 3 oder 4 und
G Wasserstoff, Alkyl, Alkenyl, Aryl, Heteroaryl, N=C(R)₂, CONHAryl, C(O)Aryl oder CONHAlkyl bedeutet.

6. Verbindungen der Formel XXIV 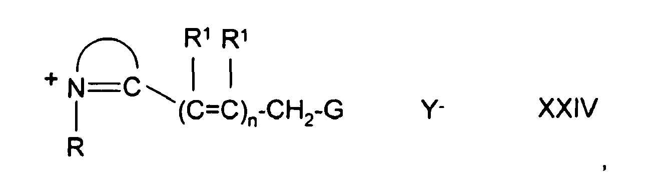 wobei
n 0, 1, 2, 3 oder 4,
G Wasserstoff, Alkyl, Alkenyl, Aryl, Heteroaryl, N=C(R)₂, CONHAryl, C(O)Aryl oder CONHAlkyl,
R Alkyl, Alkenyl, Cycloalkyl, Aryl oder Heteroaryl,
R¹ jeweils unabhängig voneinander H, Cl, Br, I, Alkyl, teilweise oder vollständig chloriertes Alkyl, Alkenyl, Cycloalkyl, Aryl, Heteroaryl, OAlkyl, OAryl, SAlkyl, SAryl, NHAlkyl, N(Alkyl)₂, C(O)H, C(O)Alkyl, C(O)Aryl, CN, N=N-Aryl, P(Aryl)₂, NHC(O)Alkyl oder NHC(O)Aryl bedeutet und
das Ringsystem, , dargestellt durch 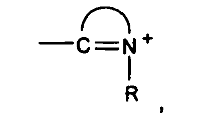 einen Stickstoff enthaltenden ungesättigten mono-, bi- oder tricyclischen Heterocyclus mit 5 bis 13 Ringgliedern bedeutet, wobei weiterhin 1, 2 oder 3 N- und/oder 1 oder 2 S- oder O-Atome vorliegen können und der heterocyclische Rest ein- oder mehrfach durch Z substituiert sein kann,
Z Wasserstoff, Alkyl, NO₂, F, Cl, Br, I, OH, COOH, OAlkyl, SCN,
SCF₃, COOAlkyl, CH₂-COOAlkyl, NH₂, NHAlkyl oder N(Alkyl)₂ bedeutet
und
wobei Y⁻ ein CAB⁻-Anion der allgemeinen Formel (II-1)
[B(CN)_{y1}F_{4-y1-x1}(R⁰)ₓ₁]⁻ (II-1)
ist und
y1 1, 2, 3 oder 4,
x1 0, 1, 2 oder 3 und
R⁰ Alkyl, Aryl, fluoriertes Alkyl, fluoriertes Aryl, Cycloalkyl oder Alkyl-Aryl bedeutet, mit der Bedingung, dass R⁰ Wasserstoff sein kann, wenn y1 >2 ist.

7. Verfahren zur Herstellung der Verbindungen der Formel XXIV gemäß Anspruch 6,
**dadurch gekennzeichnet, dass**
eine Verbindung der Formel XXV 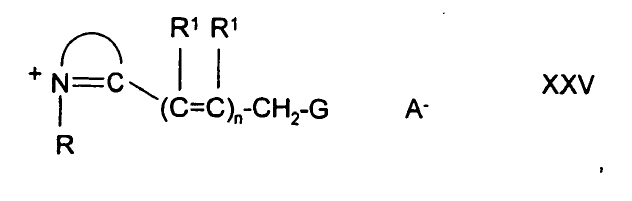 worin
A⁻ Cl⁻, Br⁻ , I⁻, BF₄⁻, PF₆⁻, ClO₄⁻, Sulfat, Tosylat, Hydrosulfat, Triflat, Trifluoracetat, Acetat oder Oxalat bedeutet,
das Ringsystem, dargestellt durch 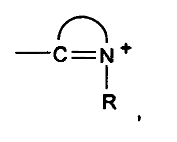 einen Stickstoff enthaltenden ungesättigten mono-, bi- oder tricyclischen Heterocyclus mit 5 bis 13 Ringgliedern bedeutet, wobei weiterhin 1, 2 oder 3 N- und/oder 1 oder 2 S- oder O-Atome vorliegen können und der heterocyclische Rest ein- oder mehrfach durch Z substituiert sein kann,
Z Wasserstoff, Alkyl, NO₂, F, Cl, Br, I, OH, COOH, OAlkyl, SCN, SCF₃, COOAlkyl, CH₂-COOAlkyl, NH₂, NHAlkyl oder N(Alkyl)₂,
n 0, 1, 2, 3 oder 4,
R Alkyl, Alkenyl, Cycloalkyl, Aryl oder Heteroaryl,
R¹ jeweils unabhängig voneinander H, Cl, Br, I, Alkyl, teilweise oder vollständig chloriertes Alkyl, Alkenyl, Cycloalkyl, Aryl, Heteroaryl, OAlkyl, OAryl, SAlkyl, SAryl, NHAlkyl, N(Alkyl)₂, C(O)H, C(O)Alkyl, C(O)Aryl, CN, N=N-Aryl, P(Aryl)₂, NHC(O)Alkyl oder NHC(O)Aryl und
G Wasserstoff, Alkyl, Alkenyl, Aryl, Heteroaryl, N=C(R)₂, CONHAryl, C(O)Aryl oder CONHAlkyl bedeutet,
mit einer Verbindung der Formel XXVI
E⁺ Y⁻ XXVI,
umgesetzt wird, worin
E⁺ ein Kation der Alkali-, Erdalkalimetalle oder eines Metalls der Gruppe 11 und 12, Ammonium, Alkylammonium mit C₁-C₄-Alkyl, Phosphonium, Alkylphosphonium mit C₁-C₄-Alkyl oder Guanidinium ist und
wobei Y⁻ ein CAB⁻-Anion der allgemeinen Formel (II-1)
[B(CN)_{y1}F_{4-y1}-ₓ₁(R⁰)ₓ₁]⁻ (II-1)
ist und
y1 1, 2, 3 oder 4,
x1 0, 1, 2 oder 3 und
R⁰ Alkyl, Aryl, fluoriertes Alkyl, fluoriertes Aryl, Cycloalkyl oder Alkyl-Aryl bedeutet, mit der Bedingung, dass R⁰ Wasserstoff sein kann, wenn y1 >2 ist.

8. Verfahren zur Herstellung von kationischen Farbstoffen gemäß Anspruch 1, **dadurch gekennzeichnet, dass** CAT⁺ ein Kation eines Azofarbstoffs ist, wobei der Azofarbstoff der Formel XXVIII entspricht 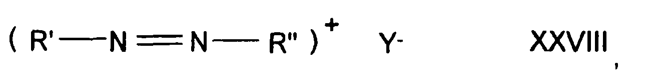 wobei
R' und R" Aryl oder Heteroaryl bedeuten und einer der beiden aromatischen Kerne positiv geladen ist und
wobei Y' ein CAB⁻-Anion der allgemeinen Formel (II-1)
IB(CN)_{y1}F₄-_{y1-x1}(R⁰)ₓ₁]⁻ (II-1)
ist und
y1 1, 2, 3 oder 4,
x1 0, 1, 2 oder 3 und
R⁰ Alkyl, Aryl, fluoriertes Alkyl, fluoriertes Aryl, Cycloalkyl oder Alkyl-Aryl bedeutet, mit der Bedingung, dass R⁰ Wasserstoff sein kann, wenn y1>2 ist,
**dadurch gekennzeichnet, dass** eine Verbindung der Formel XXIX
R'-N₂⁺ Y⁻ XXIX
wobei R' und Y⁻ eine der bei Formel XXVIII angegebene Bedeutung mit der aromatischen cyclischen oder heterocyclischen Verbindung umgesetzt wird.

9. Verbindungen der Formel XXIX
R'-N₂⁺ Y⁻ XXIX
worin
R' Aryl oder Heteroaryl bedeutet und
wobei Y⁻ ein CAB⁻-Anion der allgemeinen Formel (II-1)
[B(CN)_{y1}F_{4-y1-x1}(R⁰)ₓ₁]⁻ (II-1)
ist und
y1 1, 2, 3 oder 4,
x1 0, 1, 2 oder 3 und
R⁰ Alkyl, Aryl, fluoriertes Alkyl, fluoriertes Aryl, Cycloalkyl oder Alkyl-Aryl bedeutet, mit der Bedingung, dass R⁰ Wasserstoff sein kann, wenn y1 >2 ist.

10. Verwendung der Farbstoffe gemäß einem der Ansprüche 1 bis 3 zum Färben von Kunststoffen und Kunststofffasern, zur Herstellung von Flexodruckfarben, als Kugelschreiberpasten, als Stempelfarbe, zum Färben von Leder und Papier, in kosmetischen Formulierungen in der Farbindustrie, in der Biochemie, der Biologie, der Medizin, der Analytik oder der Elektronik.

11. Verwendung der Farbstoffe gemäß einem der Ansprüche 1 bis 3 in Datenerfassungssystemen, der Reprographie, in Mikrofarbfiltern, in der Photogalvanik, der Lasertechnik oder der Photoindustrie.

12. Verwendung der Farbstoffe gemäß einem der Ansprüche 1 bis 3 für CD-Recorder, DVD-Recorder (DVD+R, DVD+RW), Bluray-Disc (BD-ROM, BD-R, BD-RE), Computer to Plate, Laser Filter, Laser Marking oder Photopolymerisation.

## Claims

1. Cationic dyes of the general formula I
CAT⁺ Y- (I),
where Y⁻ is a CAB⁻ anion of the general formula (II-1)
[B(CN)_{y1}F_{4-yl-x1}(R⁰)ₓ₁]⁻ (II-1)
and
y1 denotes 1, 2, 3 or 4,
x1 denotes 0, 1, 2 or 3 and
R⁰ denotes alkyl, aryl, fluorinated alkyl, fluorinated aryl, cycloalkyl or alkylaryl, with the condition that R⁰ may be hydrogen if y1 is >2,
and
CAT⁺ is a cation selected from the group of the azine, xanthene, polymethine, styryl, azo, tetrazolium, pyrylium, benzopyrylium, thiopyrylium, benzothiopyrylium, thiazine, oxazine, triarylmethane, diarylmethane, acridine, quinoline, isoquinoline or quaternised azafluorenone dyes.

2. Dyes according to Claim 1, **characterised in that** CAT⁺ is a cation of a polymethine dye.

3. Dyes according to Claim 2, **characterised in that** CAT⁺ is a cation of a cyanine dye, carbocyanine dye, azacarbocyanine dye, diazacarbocyanine dye, triazacarbocyanine dye, hemicyanine dye or diazahemicyanine dye.

4. Process for the preparation of cationic dyes according to one of Claims 1 to 3, **characterised in that**
a compound of the general formula XXI
CAT⁺A⁻ (XXI),
where CAT⁺ is a cation selected from the group of the azine, xanthene, polymethine, styryl, azo, tetrazolium, pyrylium, benzopyrylium, thiopyrylium, benzothiopyrylium, thiazine, oxazine, triarylmethane, diarylmethane, acridine, quinoline, isoquinoline or quaternised azafluorenone dyes
and A⁻ denotes Cl⁻, Br⁻, I⁻, BF₄⁻, PF₆⁻, ClO₄⁻, sulfate, tosylate, hydrosulfate, triflate, trifluoroacetate, acetate or oxalate,
is reacted with a compound of the general formula XXII
E⁺ Y⁻ (XXII)
where Y⁻ is a CAB⁻ anion of the general formula (II-1)
[B(CN)_{y1}F_{4-y1-x1}(R⁰)ₓ₁]⁻ (II-1)
and
y1 denotes 1, 2, 3 or 4,
x1 denotes 0, 1, 2 or 3 and
R⁰ denotes alkyl, aryl, fluorinated alkyl, fluorinated aryl, cycloalkyl or alkylaryl, with the condition that R⁰ may be hydrogen if y1 is >2,
and
E⁺ is a cation of the alkali metals, alkaline earth metals or of a metal from group 11 and 12, ammonium, alkylammonium containing C₁-C₄-alkyl, phosphonium, alkylphosphonium containing C₁-C₄-alkyl or guanidinium.

5. Process for the preparation of cationic dyes according to Claim 4, **characterised in that** CAT⁺ is a cation of a carbocyanine dye, where the carbocyanine dye conforms to the formula XXIII 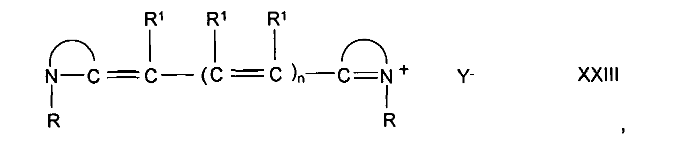 in which
n denotes 0, 1, 2, 3, 4 or 5,
R in each case, independently of one another, denotes alkyl, alkenyl, cycloalkyl, aryl or heteroaryl and
R¹ in each case, independently of one another, denotes H, Cl, Br, I, alkyl, partially or fully chlorinated alkyl, alkenyl, cycloalkyl, aryl, heteroaryl, Oalkyl, Oaryl, Salkyl, Saryl, NHalkyl, N(alkyl)₂, C(O)H, C(O)alkyl, C(O)aryl, CN, N=N-aryl, P(aryl)₂, NHC(O)alkyl or NHC(O)aryl and
the ring system, represented by 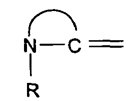 or 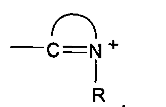 denotes a nitrogen-containing unsaturated mono-, bi- or tricyclic heterocycle having 5 to 13 ring members, in which furthermore 1, 2 or 3 N atoms and/or 1 or 2 S or O atoms may be present and the heterocyclic radical may be mono- or polysubstituted by Z,
Z denotes hydrogen, alkyl, NO₂, F, Cl, Br, I, OH, COOH, Oalkyl, SCN,
SCF₃, C00alkyl, CH₂-COOalkyl, NH₂, NHalkyl or N(alkyl)₂
and
where Y⁻ is a CAB⁻ anion of the general formula (II-1)
[B(CN)_{y1}F_{4-y1-x1}(R⁰)ₓ₁]⁻ (II-1)
and
y1 denotes 1, 2, 3 or 4,
x1 denotes 0, 1, 2 or 3 and
R⁰ denotes alkyl, aryl, fluorinated alkyl, fluorinated aryl, cycloalkyl or alkylaryl, with the condition that R⁰ may be hydrogen if y1 is >2, **characterised in that** use is made of a compound of the formula XXIV 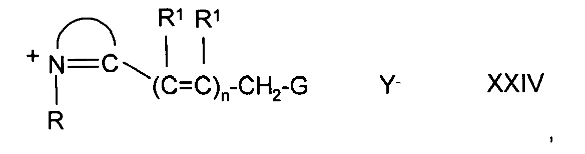 where the ring system, R, R¹ and Y⁻ have one of the meanings indicated in the case of formula XXIII and
n denotes 0, 1, 2, 3 or 4 and
G denotes hydrogen, alkyl, alkenyl, aryl, heteroaryl, N=C(R)₂, CONHaryl, C(O)aryl or CONHalkyl.

6. Compounds of the formula XXIV 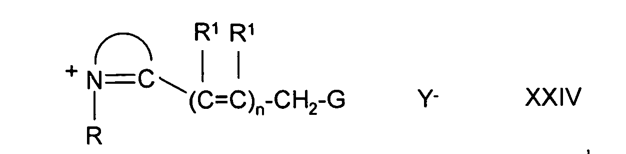 where
n denotes 0, 1, 2, 3 or 4,
G denotes hydrogen, alkyl, alkenyl, aryl, heteroaryl, N=C(R)₂, CONHaryl, C(O)aryl or CONHalkyl,
R denotes alkyl, alkenyl, cycloalkyl, aryl or heteroaryl,
R¹ in each case, independently of one another, denotes H, Cl, Br, I, alkyl, partially or fully chlorinated alkyl, alkenyl, cycloalkyl, aryl, heteroaryl, Oalkyl, Oaryl, Salkyl, Saryl, NHalkyl, N(alkyl)₂, C(O)H, C(O)alkyl, C(O)aryl, CN, N=N-aryl, P(aryl)₂, NHC(O)alkyl or NHC(O)aryl and
the ring system, represented by 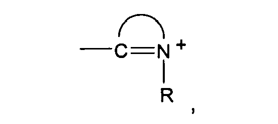 denotes a nitrogen-containing unsaturated mono-, bi- or tricyclic heterocycle having 5 to 13 ring members, in which furthermore 1, 2 or 3 N atoms and/or 1 or 2 S or O atoms may be present and the heterocyclic radical may be mono- or polysubstituted by Z,
Z denotes hydrogen, alkyl, NO₂, F, Cl, Br, I, OH, COOH, Oalkyl, SCN,
SCF₃, COOalkyl, CH₂-COOalkyl, NH₂, NHalkyl or N(alkyl)₂
and
where Y⁻ is a CAB⁻ anion of the general formula (II-1)
[B(CN)_{y1}F_{4-y1-x1}(R⁰)ₓ₁]⁻ (II-1)
and
y1 denotes 1, 2, 3 or 4,
x1 denotes 0, 1, 2 or 3 and
R⁰ denotes alkyl, aryl, fluorinated alkyl, fluorinated aryl, cycloalkyl or alkylaryl, with the condition that R⁰ may be hydrogen if y1 is >2,

7. Process for the preparation of the compounds of the formula XXIV according to Claim 6,
**characterised in that**
a compound of the formula XXV 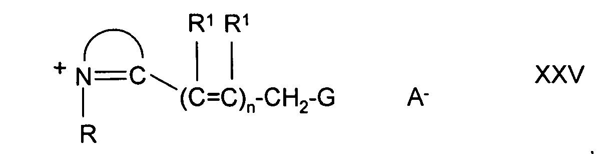 in which
A⁻ denotes Cl⁻, Br⁻, I⁻, BF₄⁻, PF₆⁻, ClO₄⁻ , sulfate, tosylate, hydrosulfate, triflate, trifluoroacetate, acetate or oxalate,
the ring system, represented by 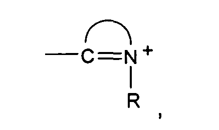 denotes a nitrogen-containing unsaturated mono-, bi- or tricyclic heterocycle having 5 to 13 ring members, in which furthermore 1, 2 or 3 N atoms and/or 1 or 2 S or O atoms may be present and the heterocyclic radical may be mono- or polysubstituted by Z,
Z denotes hydrogen, alkyl, NO₂. F, Cl, Br, I, OH, COOH, Oalkyl, SCN, SCF₃, COOalkyl, CH₂-COOalkyl, NH₂, NHalkyl or N(alkyl)₂,
n denotes 0, 1, 2, 3 or 4,
R denotes alkyl, alkenyl, cycloalkyl, aryl or heteroaryl,
R¹ in each case, independently of one another, denotes H, Cl, Br, I, alkyl, partially or fully chlorinated alkyl, alkenyl, cycloalkyl, aryl, heteroaryl, Oalkyl, Oaryl, Salkyl, Saryl, NHalkyl, N(alkyl)₂, C(O)H, C(O)alkyl, C(O)aryl, CN, N=N-aryl, P(aryl)₂, NHC(O)alkyl or NHC(O)aryl and
G denotes hydrogen, alkyl, alkenyl, aryl, heteroaryl, N=C(R)₂, CONHaryl, C(O)aryl or CONHalkyl,
is reacted with a compound of the formula XXVI
E⁺ Y⁻ XXVI,
in which
E⁺ is a cation of the alkali metals, alkaline earth metals or of a metal from group 11 and 12, ammonium, alkylammonium containing C₁-C₄-alkyl, phosphonium, alkylphosphonium containing C₁-C₄-alkyl or guanidinium and
where Y⁻ is a CAB⁻ anion of the general formula (II-1)
[B(CN)_{y1}F_{4-y1-x1}(R⁰)ₓ₁]⁻ (II-1)
and
y1 denotes 1, 2, 3 or 4,
x1 denotes 0, 1, 2 or 3 and
R⁰ denotes alkyl, aryl, fluorinated alkyl, fluorinated aryl, cycloalkyl or alkylaryl, with the condition that R⁰ may be hydrogen if y1 is >2.

8. Process for the preparation of cationic dyes according to Claim 1, **characterised in that** CAT⁺ is a cation of an azo dye, where the azo dye conforms to the formula XXVIII 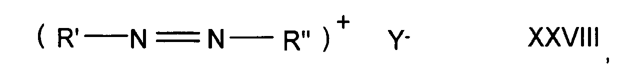 where R' and R" denote aryl or heteroaryl and one of the two aromatic nuclei is positively charged and
where Y⁻ is a CAB⁻ anion of the general formula (II-1)
[B(CN)_{y1}F_{4-y1-x1}(R⁰)ₓ₁]⁻ (II-1)
and
y1 denotes 1, 2, 3 or 4,
x1 denotes 0, 1, 2 or 3 and
R⁰ denotes alkyl, aryl, fluorinated alkyl, fluorinated aryl, cycloalkyl or alkylaryl, with the condition that R⁰ may be hydrogen if y1 is >2, **characterised in that** a compound of the formula XXIX
R'-N₂⁺ Y⁻ XXIX
where R' and Y⁻ have one of the meanings indicated in the case of formula XXVIII, is reacted with the aromatic cyclic or heterocyclic compound R".

9. Compounds of the formula XXIX
R'-N₂⁺ Y⁻ XXIX
in which
R' denotes aryl or heteroaryl and
where Y⁻ is a CAB⁻ anion of the general formula (II-1)
[B(CN)_{y1}F_{4-y1-x1}(R⁰)ₓ₁]⁻ (II-1)
and
y1 denotes 1, 2, 3 or 4,
x1 denotes 0, 1, 2 or 3'and
R⁰ denotes alkyl, aryl, fluorinated alkyl, fluorinated aryl, cycloalkyl or alkylaryl, with the condition that R⁰ may be hydrogen if y1 is >2.

10. Use of the dyes according to one of Claims 1 to 3 for colouring plastics and plastic fibres, for the preparation of flexographic printing inks, as ball-point pen pastes, as stamp ink, for colouring leather and paper, in cosmetic formulations, in the paints industry, in biochemistry, biology, medicine, analytics or electronics.

11. Use of the dyes according to one of Claims 1 to 3 in data acquisition systems, reprography, in colour microfilters, in photogalvanics, laser technology or the photo industry.

12. Use of the dyes according to one of Claims 1 to 3 for CD recorders, DVD recorders (DVD+R, DVD+RW), Blu-ray discs (BD-ROM, BD-R, BD-RE), computer to plate, laser filters, laser marking or photopolymerisation.

## Revendications

1. Colorants cationiques de formule générale I
CAT⁺ Y⁻ (I),
dans laquelle Y⁻ est un anion CAB⁻ de formule générale (II-1)
[B(CN)_{y1}F_{4-y1-x1}(R⁰)ₓ₁]⁻ (II-1)
et
y1 désigne 1, 2, 3 ou 4,
x1 désigne 0, 1, 2 ou 3 et
R⁰ désigne alkyle, aryle, alkyle fluoré, aryle fluoré, cycloalkyle ou alkyl-aryle, à condition que R⁰ puisse être hydrogène si y1 est >2,
et
CAT⁺ est un cation choisi dans le groupe constitué par les colorants à base d'azine, de xanthène, de polyméthine, de styryle, azoïques, de tétrazolium, de pyrylium, de benzopyrylium, de thiopyrylium, de benzothiopyrylium, de thiazine, d'oxazine, de triarylméthane, de diarylméthane, d'acridine, de quinoléine, d'isoquinoléine ou d'azafluorénone quaternisée.

2. Colorants selon la revendication 1, **caractérisés en ce que** CAT⁺ est un cation d'un colorant à base de polyméthine.

3. Colorants selon la revendication 2, **caractérisés en ce que** CAT⁺ est un cation d'un colorant à base de cyanine, d'un colorant à base de carbocyanine, d'un colorant à base d'azacarbocyanine, d'un colorant à base de diazacarbocyanine, d'un colorant à base de triazacarbocyanine, d'un colorant à base d'hémicyanine ou d'un colorant à base de diazahémi-cyanine.

4. Procédé de préparation de colorants cationiques selon l'une des revendications 1 à 3, **caractérisé en ce que**
un composé de formule générale XXI
CAT⁺A⁻ (XXI),
dans laquelle CAT⁺ est un cation choisi dans le groupe constitué par les colorants à base d'azine, de xanthène, de polyméthine, de styryle, azoïques, de tétrazolium, de pyrylium, de benzopyrylium, de thiopyrylium, de benzothiopyrylium, de thiazine, d'oxazine, de triarylméthane, de diarylméthane, d'acridine, de quinoléine, d'isoquinoléine ou d'azafluorénone quaternisée
et A⁻ désigne Cl⁻, Br⁻, I⁻, BF₄⁻, PF₆⁻, ClO₄⁻, sulfate, tosylate, hydrosulfate, triflate, trifluoroacétate, acétate ou oxalate,
est réagi avec un composé de formule générale XXII
E⁺ Y⁻ (XXII)
dans laquelle Y⁻ est un anion CAB⁻ de formule générale (II-1)
[B(CN)_{y1}F_{4-y1-x1}(R⁰)ₓ₁]⁻ (II-1)
et
y1 désigne 1, 2, 3 ou 4,
x1 désigne 0, 1, 2 ou 3 et
R⁰ désigne alkyle, aryle, alkyle fluoré, aryle fluoré, cycloalkyle ou alkyl-aryle, à condition que R⁰ puisse être hydrogène si y1 est >2,
et
E⁺ est un cation des métaux alcalins, des métaux alcalino-terreux ou d'un métal issu des groupes 11 et 12, ammonium, alkylammonium contenant C₁-C₄-alkyle, phosphonium, alkylphosphonium contenant C₁-C₄-alkyle ou guanidinium.

5. Procédé de préparation de colorants cationiques selon la revendication 4, **caractérisé en ce que** CAT⁺ est un cation d'un colorant à base de carbocyanine, où le colorant à base de carbocyanine répond à la formule XXIII 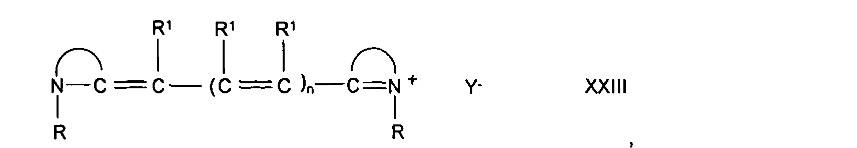 dans laquelle
n désigne 0, 1, 2, 3, 4 ou 5,
R dans chaque cas, indépendamment l'un de l'autre, désigne alkyle, alcényle, cycloalkyle, aryle ou hétéroaryle et
R¹ dans chaque cas, indépendamment l'un de l'autre, désigne H, CI, Br, I, alkyle, alkyle partiellement ou totalement chloré, alcényle, cycloalkyle, aryle, hétéroaryle, Oalkyle, Oaryle, Salkyle, Saryle, NHalkyle, N(alkyl)₂, C(O)H, C(O)alkyle, C(O)aryle, CN, N=N-aryle, P(aryl)₂, NHC(O)alkyle ou NHC(O)aryle et
le noyau, représenté par 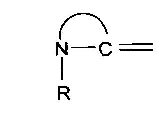 ou 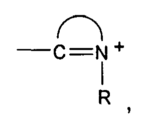 désigne un hétérocycle mono-, bi- ou tricyclique insaturé azoté ayant de 5 à 13 chaînons, dans lequel en outre 1, 2 ou 3 atomes de N et/ou 1 ou 2 atomes de S ou O peuvent être présents et le radical hétérocyclique peut être mono- ou polysubstitué par Z,
Z désigne hydrogène, alkyle, NO₂, F, Cl, Br, I, OH, COOH, Oalkyle,
SCN, SCF₃, COOalkyle, CH₂-COOalkyle, NH₂, NHalkyle ou N(alkyl)₂
et
où Y⁻ est un anion CAB⁻ de formule générale (II-1)
[B(CN)_{y}F_{4-y1-x1}(R⁰)ₓ₁]⁻ (II-1)
et
y1 désigne 1, 2, 3 ou 4,
x1 désigne 0, 1, 2 ou 3 et
R⁰ désigne alkyle, aryle, alkyle fluoré, aryle fluoré, cycloalkyle ou alkyl-aryle, à condition que R⁰ puisse être hydrogène si y1 est >2, **caractérisé en ce que** l'on utilise un composé de formule XXIV 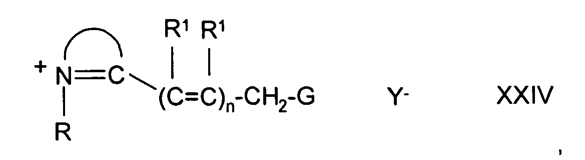 où le noyau, R, R¹ et Y⁻ revêtent l'une des significations indiquées dans le cas de la formule XXIII et
n désigne 0, 1, 2, 3 ou 4 et
G désigne hydrogène, alkyle, alcényle, aryle, hétéroaryle, N=C(R)₂, CONHaryle, C(O)aryle ou CONHalkyle.

6. Composés de formule XXIV 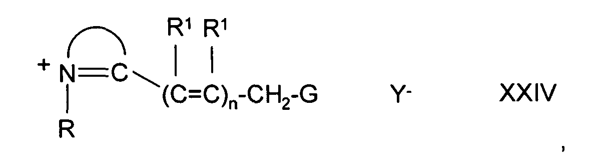 dans laquelle
n désigne 0, 1, 2, 3 ou 4,
G désigne hydrogène, alkyle, alcényle, aryle, hétéroaryle, N=C(R)₂, CONHaryle, C(O)aryle ou CONHalkyle,
R désigne alkyle, alcényle, cycloalkyle, aryle ou hétéroaryle,
R¹ dans chaque cas, indépendamment l'un de l'autre, désigne H, Cl, Br, I, alkyle, alkyle partiellement ou totalement chloré, alcényle, cycloalkyle, aryle, hétéroaryle, Oalkyle, Oaryle, Salkyle, Saryle, NHalkyle, N(alkyl)₂, C(O)H, C(O)alkyle, C(O)aryle, CN, N=N-aryle, P(aryl)₂, NHC(O)alkyle ou NHC(O)aryle et
le noyau, représenté par 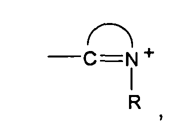 désigne un hétérocycle mono-, bi- ou tricyclique insaturé azoté ayant de 5 à 13 chaînons, dans lequel en outre 1, 2 ou 3 atomes de N et/ou 1 ou 2 atomes de S ou O peuvent être présents et le radical hétérocyclique peut être mono- ou polysubstitué par Z,
Z désigne hydrogène, alkyle, NO², F, Cl, Br, I, OH, COOH, Oalkyle,
SCN, SCF₃, COOalkyle, CH₂-COOalkyle, NH₂, NHalkyle ou N(alkyl)₂
et
où Y⁻ est un anion CAB⁻ de formule générale (II-1)
[B(CN)_{y1}F_{4-y1}-ₓ₁(R⁰)ₓ₁]⁻ (II-1)
et
y1 désigne 1, 2, 3 ou 4,
x1 désigne 0, 1, 2 ou 3 et
R⁰ désigne alkyle, aryle, alkyle fluoré, aryle fluoré, cycloalkyle ou alkyl-aryle, à condition que R⁰ puisse être hydrogène si y1 est >2,

7. Procédé de préparation des composés de formule XXIV selon la revendication 6,
**caractérisé en ce qu'**un composé de formule XXV 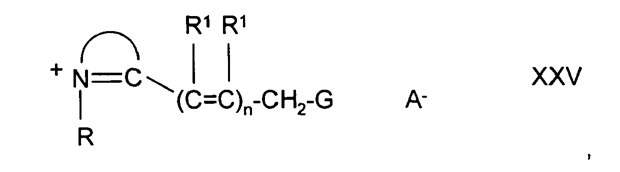 dans laquelle
A⁻ désigne Cl⁻, Br⁻, I⁻, BF₄⁻, PF₆⁻, ClO₄⁻ , sulfate, tosylate, hydrosulfate, triflate, trifluoroacétate, acétate ou oxalate,
le noyau, représenté par 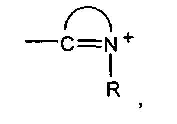 désigne un hétérocycle mono-, bi- ou tricyclique insaturé azoté ayant de 5 à 13 chaînons, dans lequel en outre 1, 2 ou 3 atomes de N et/ou 1 ou 2 atomes de S ou O peuvent être présents et le radical hétérocyclique peut être mono- ou polysubstitué par Z,
Z désigne hydrogène, alkyle, NO₂, F, Cl, Br, I, OH, COOH, Oalkyle, SCN, SCF₃, COOalkyle, CH₂-COOalkyle, NH₂, NHalkyle ou N(alkyl)₂,
n désigne 0, 1, 2, 3 ou 4,
R désigne alkyle, alcényle, cycloalkyle, aryle ou hétéroaryle,
R¹ dans chaque cas, indépendamment l'un de l'autre, désigne H, Cl, Br, I, alkyle, alkyle partiellement ou totalement chloré, alcényle, cycloalkyle, aryle, hétéroaryle, Oalkyle, Oaryle, Salkyle, Saryle, NHalkyle, N(alkyl)₂, C(O)H, C(O)alkyle, C(O)aryle, CN, N=N-aryle, P(aryl)₂, NHC(O)alkyle ou NHC(O)aryle et
G désigne hydrogène, alkyle, alcényle, aryle, hétéroaryle, N=C(R)₂, CONHaryle, C(O)aryle ou CONHalkyle,
est réagi avec un composé de formule XXVI
E⁺ Y⁻ XXVI,
dans laquelle
E⁺ est un cation des métaux alcalins, des métaux alcalino-terreux ou d'un métal issu des groupes 11 et 12, ammonium, alkylammonium contenant C₁-C₄-alkyle, phosphonium, alkylphosphonium contenant C₁-C₄-alkyle ou guanidinium et
où Y⁻ est un anion CAB⁻ de formule générale (II-1)
[B(CN)_{y1}F_{4-y1-x1}(R⁰)ₓ₁]⁻ (II-1)
et
y1 désigne 1, 2, 3 ou 4,
x1 désigne 0, 1, 2 ou 3 et
R⁰ désigne alkyle, aryle, alkyle fluoré, aryle fluoré, cycloalkyle ou alkyl-aryle, à condition que R⁰ puisse être hydrogène si y1 est >2.

8. Procédé de préparation de colorants cationiques selon la revendication 1, **caractérisé en ce que** CAT⁺ est un cation d'un colorant azoïque, où le colorant azoïque répond à la formule XXVIII 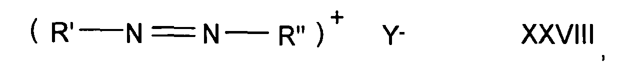 dans laquelle
R' et R" désignent aryle ou hétéroaryle et l'un des deux noyaux aromatiques est chargé positivement et
où Y⁻ est un anion CAB⁻ de formule générale (II-1)
[B(CN)_{y1}F_{4-y1-x1}(R⁰)ₓ₁]⁻ (II-1)
et
y1 désigne 1, 2, 3 ou 4,
x1 désigne 0, 1, 2 ou 3 et
R⁰ désigne alkyle, aryle, alkyle fluoré, aryle fluoré, cycloalkyle ou alkyl-aryle, à condition que R⁰ puisse être hydrogène si y1 est >2,
**caractérisé en ce qu'**un composé de formule XXIX
R'-N₂⁺ Y⁻ XXIX
dans laquelle R' et Y⁻ revêtent l'une des significations indiquées dans le cas de la formule XXVIII,
est réagi avec le composé aromatique cyclique ou hétérocyclique R".

9. Composés de formule XXIX
R'-N₂⁺ Y⁻ XXIX
dans laquelle
R' désigne aryle ou hétéroaryle et
où Y⁻ est un anion CAB⁻ de formule générale (II-1)
[B(CN)_{y1}F_{4-y1-x1}(R⁰)ₓ₁]⁻ (II-1)
et
y1 désigne 1, 2, 3 ou 4,
x1 désigne 0, 1, 2 ou 3 et
R⁰ désigne alkyle, aryle, alkyle fluoré, aryle fluoré, cycloalkyle ou alkyl-aryle, à condition que R⁰ puisse être hydrogène si y1 est >2.

10. Utilisation des colorants selon l'une des revendications 1 à 3, pour la coloration de matières plastiques et de fibres plastiques, pour la préparation d'encres d'impression flexographique, comme pâtes pour stylos à bille, comme encre à tampon, pour la coloration du cuir et du papier, dans les formulations cosmétiques, dans l'industrie des peintures, en biochimie, biologie, médicine, analytique ou électronique.

11. Utilisation des colorants selon l'une des revendications 1 à 3, dans les systèmes de saisies de données, la reprographie, dans des micro-filtres colorés, la photogalvanique, la technologie laser ou l'industrie photographique.

12. Utilisation des colorants selon l'une des revendications 1 à 3, pour les graveurs de CD, les graveurs de DVD (DVD+R, DVD+RW), les disques Blu-ray (BD-ROM, BD-R, BD-RE), l'exposition directe des plaques, les filtres laser, le marquage au laser ou la photo-polymérisation.
